(19) **Europäisches Patentamt / European Patent Office / Office européen des brevets**

(11) **EP 4 099 767 A1**

(12) **EUROPEAN PATENT APPLICATION**
published in accordance with Art. 153(4) EPC

(43) Date of publication:
**07.12.2022 Bulletin 2022/49**

(21) Application number: **20917962.1**

(22) Date of filing: **06.02.2020**

(51) International Patent Classification (IPC):
**H04W 52/08** (2009.01)   **H04W 52/14** (2009.01)

(52) Cooperative Patent Classification (CPC):
**H04W 52/08; H04W 52/14**

(86) International application number:
**PCT/CN2020/074440**

(87) International publication number:
**WO 2021/155541 (12.08.2021 Gazette 2021/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **CHEN, Wenhong**
**Dongguan, Guangdong 523860 (CN)**

(74) Representative: **Mewburn Ellis LLP**
**Aurora Building**
**Counterslip**
**Bristol BS1 6BX (GB)**

(54) **TRANSMISSION POWER DETERMINATION METHOD AND APPARATUS, DEVICE, AND STORAGE MEDIUM**

(57)   Implementations of the present disclosure disclose methods and apparatuses for determining transmit power, devices, and a storage medium. The present disclosure is related to the field of mobile communications. The method includes the following. Determine a first closed-loop power control adjustment state index corresponding to a sounding reference signal (SRS) resource set. Determine a closed-loop power control adjustment state for the SRS resource set from multiple closed-loop power control adjustment states, according to the first closed-loop power control adjustment state index, where the multiple closed-loop power control adjustment states are independent of a physical uplink shared channel (PUSCH). Determine transmit power for the at least one SRS resource according to a value of the closed-loop power control adjustment state. A new method for determining transmit power for an SRS resource is provided. The terminal device can determine closed-loop power control adjustment states respective for different SRS resource sets, and then can determine transmit power for each SRS resource set, thereby improving an accuracy of transmit power control.

Terminal device    Network device

601, transmit, by the network device, a first closed-loop power control adjustment state index corresponding to an SRS resource set to the terminal device

602, receive, by the terminal device, the first closed-loop power control adjustment state index transmitted by the network device

603, determine, by the terminal device, the first closed-loop power control adjustment state index corresponding to the SRS resource set

604, determine, by the terminal device, a closed-loop power control adjustment state for the SRS resource set from multiple closed-loop power control adjustment states according to the first closed-loop power control adjustment state index

605, determine, by the terminal device, transmit power for at least one SRS resource according to a value of the closed-loop power control adjustment state

FIG. 6

**Description**

TECHNICAL FIELD

This disclosure relates to the technical field of mobile communications, and in particular, to methods and apparatuses for determining transmit power, devices, and a storage medium.

BACKGROUND

In a new radio (NR) system, terminal devices and network devices need to communicate with each other. During the communication process, the network device can configure parameter information of a sounding reference signal (SRS) resource set for the terminal device, and then the terminal device can determine transmit power for SRSs according to the configured parameter information of the SRS resource set.

In the related art, the terminal device supports transmission of SRSs on different antenna panels, or transmission of different SRSs to different transmission reception points (TRPs), but only supports a separate SRS closed-loop power control adjustment state, then when the terminal device determines transmit power for SRSs on each antennal panel or SRSs transmitted to different TRPs, the terminal device can only determine transmit power for SRSs according to a same closed-loop power control adjustment state.

However, due to differences in spatial locations of different antenna panels and different TRPs, if a same closed-loop power control adjustment state is adopted for SRSs on different antenna panels or SRSs transmitted to different TRPs, the network device cannot dynamically adjust transmit power for the two types of SRSs independently, which may cause insufficient transmit power for SRSs or a waste of transmit power for SRSs. Therefore, how to improve a utilization rate of transmit power for SRSs becomes an urgent problem to be solved.

SUMMARY

Implementations of the present disclosure provide methods and apparatuses for determining transmit power, devices, and a storage medium, which provide a solution for insufficient transmit power for sounding reference signals (SRSs) or a waste of transmit power for SRSs due to that SRS resources on different antenna panels adopt same transmit power. The technical solution is as follows.

According to an aspect of the present disclosure, a method for determining transmit power is provided. The method is applied to a terminal device and includes the following. Determine a first closed-loop power control adjustment state index corresponding to a sounding reference signal (SRS) resource set, where the first closed-loop power control adjustment state index is used to indicate a closed-loop power control adjustment state for the SRS resource set, and the SRS resource set includes at least one SRS resource. Determine the closed-loop power control adjustment state for the SRS resource set from multiple closed-loop power control adjustment states, according to the first closed-loop power control adjustment state index, where the multiple closed-loop power control adjustment states are independent of a physical uplink shared channel (PUSCH). Determine transmit power for the at least one SRS resource according to a value of the closed-loop power control adjustment state.

According to an aspect of the present disclosure, a method for determining transmit power is provided. The method is applied to a network device and includes the following. Transmit a first closed-loop power control adjustment state index corresponding to an SRS resource set, where the first closed-loop power control adjustment state index is used to indicate a closed-loop power control adjustment state for the SRS resource set, the closed-loop power control adjustment state is one of multiple closed-loop power control adjustment states, and the SRS resource set includes at least one SRS resource.

According to an aspect of the present disclosure, an apparatus for determining transmit power is provided. The apparatus is applied to a terminal device and includes an index determining module, a state determining module, and a power determining module. The index determining module is configured to determine a first closed-loop power control adjustment state index corresponding to an SRS resource set, where the first closed-loop power control adjustment state index is used to indicate a closed-loop power control adjustment state for the SRS resource set, and the SRS resource set includes at least one SRS resource. The state determining module is configured to determine the closed-loop power control adjustment state for the SRS resource set from multiple closed-loop power control adjustment states, according to the first closed-loop power control adjustment state index, where the multiple closed-loop power control adjustment states are independent of a PUSCH. The power determining module is configured to determine transmit power for the at least one SRS resource according to a value of the closed-loop power control adjustment state.

According to an aspect of the present disclosure, an apparatus for determining transmit power is provided. The apparatus is applied to a network device and includes an index transmitting module configured to transmit a first closed-loop power control adjustment state index to a terminal device, where the first closed-loop power control adjustment state index is used to indicate a closed-loop power control adjustment state for an SRS resource set, the closed-loop power control adjustment state is one of multiple closed-loop power control adjustment states, and the SRS resource set includes at least one SRS resource.

According to an aspect of the present disclosure, a terminal device is provided. The terminal device includes a processor, a transceiver coupled with the processor, and a memory for storing executable instructions of the processor. The processor is configured to load and execute the executable instructions to implement the method for determining transmit power as illustrated in the above aspect.

According to an aspect of the present disclosure, a network device is provided. The network device includes a processor, a transceiver coupled with the processor, and a memory for storing executable instructions of the processor. The processor is configured to load and execute the executable instructions to implement the method for determining transmit power as illustrated in the above aspect.

According to an aspect of the present disclosure, a computer-readable storage medium is provided. The computer-readable storage medium stores executable instructions. The executable instructions are loaded and executed by a processor to implement the method for determining transmit power as illustrated in the above aspect.

The technical solution provided in implementations of the present disclosure include at least the following beneficial effects.

The first closed-loop power control adjustment state index corresponding to the SRS resource set is determined. Determine, according to the first closed-loop power control adjustment state index, the closed-loop power control adjustment state for the SRS resource set from the multiple closed-loop power control adjustment states. Determine, according to the value of the closed-loop power control adjustment state, the transmit power for the at least one SRS resource in the SRS resource set. A new method for determining transmit power for SRS resources is provided. The terminal device can determine a corresponding closed-loop power control adjustment state for each of different SRS resources, and then can determine transmit power for each SRS resource set, thereby improving an accuracy of transmit power control.

BRIEF DESCRIPTION OF THE DRAWINGS

To describe technical solutions in implementations of the present disclosure more clearly, the following will briefly introduce accompanying drawings required for describing the implementations. Apparently, the accompanying drawings in the following description merely illustrate some implementations of the present disclosure. Those of ordinary skill in the art can also obtain other accompanying drawings based on these accompanying drawings without creative efforts.

FIG. 1 is a schematic diagram illustrating physical downlink shared channel (PDSCH) transmission based on multiple antenna panels.

FIG. 2 is a schematic diagram illustrating physical uplink control channel (PUCCH) transmission based on multiple antenna panels.

FIG. 3 is a schematic diagram illustrating multiple antenna panel transmission based on a single physical uplink shared channel (PUSCH).

FIG. 4 is a schematic diagram illustrating selected antenna panel transmission based on a single PUSCH.

FIG. 5 is a block diagram illustrating a communication system provided in an exemplary implementation of the present disclosure.

FIG. 6 is a flow chart illustrating a method for determining transmit power provided in an exemplary implementation of the present disclosure.

FIG. 7 is a flow chart illustrating a method for determining transmit power provided in an exemplary implementation of the present disclosure.

FIG. 8 is a flow chart illustrating a method for determining transmit power provided in an exemplary implementation of the present disclosure.

FIG. 9 is a flow chart illustrating a method for determining transmit power provided in an exemplary implementation of the present disclosure.

FIG. 10 is a flow chart illustrating a method for determining transmit power provided in an exemplary implementation of the present disclosure.

FIG. 11 is a flow chart illustrating a method for determining transmit power provided in an exemplary implementation of the present disclosure.

FIG. 12 is a flow chart illustrating a method for determining transmit power provided in an exemplary implementation of the present disclosure.

FIG. 13 is a block diagram illustrating a communication apparatus provided in an exemplary implementation of the present disclosure.

FIG. 14 is a block diagram illustrating a communication apparatus provided in an exemplary implementation of the present disclosure.

FIG. 15 is a block diagram illustrating a communication apparatus provided in an exemplary implementation of the present disclosure.

FIG. 16 is a block diagram illustrating a communication apparatus provided in an exemplary implementation of the present disclosure.

FIG. 17 is a schematic structural diagram illustrating a communication device provided in an exemplary implementation of the present disclosure.

DETAILED DESCRIPTION

In order to make objectives, technical solutions, and advantages of the present disclosure clearer, implementations of the present disclosure will be further described in detail below with reference to the accompanying drawings.

First, briefly introduce terms involved in implementations of the present disclosure.

1. Sounding reference signal (SRS) transmission:

SRS transmission includes periodic SRS transmission, semi-persistent SRS transmission, and aperiodic SRS transmission.

(1) Periodic SRS transmission refers to periodic transmission of SRSs, where a period and slot offset are configured by radio resource control (RRC) signaling. Once a terminal device receives corresponding configuration parameters, the terminal device transmits SRSs according to a certain period until RRC configuration becomes invalid. Spatial correlation information (transmit beam) for periodic SRS transmission is also configured by RRC signaling. The spatial correlation information may indicate a channel state information reference signal (CSI-RS), a synchronization signal block (SSB), or a reference SRS. The terminal device determines a transmit beam for a target SRS resource according to a receive beam for the indicated CSI-RS/SSB or according to a transmit beam for a reference SRS resource.

(2) Semi-persistent SRS transmission also refers to periodic transmission of SRSs, where a period and slot offset are configured by RRC signaling, but activation signaling and deactivation signaling are carried by a medium access control control element (MAC CE). A terminal device starts to periodically transmit SRSs in response to reception of the activation signaling, until the deactivation signaling is received. Spatial correlation information (transmit beam) for semi-persistent SRSs is carried by the MAC CE that activates the SRSs.

After receiving the period and slot offset configured by RRC, the terminal device determines a slot in which SRS transmission can be performed according to the following formula: $\left( N_{\text{slot}}^{\text{frame},\mu} n_{\text{f}} + n_{\text{s,f}}^{\mu} - T_{\text{offset}} \right) \mod T_{\text{SRS}} = 0$, where $T_{SRS}$ represents a configured period, $T_{offset}$ represents a configured offset, $n_f$ represents a radio frame, and $n_{s,f}^{\mu}$ represents a slot number.

(3) Aperiodic SRS transmission:

In a new radio (NR) system, aperiodic SRS transmission is introduced, and a base station can trigger SRS transmission of a terminal device through uplink control information (UCI) or downlink control information (DCI). Trigger signaling for triggering aperiodic SRS transmission can be carried by DCI for physical uplink shared channel (PUSCH)/physical downlink shared channel (PDSCH) scheduling in a user equipment (UE)-specific search space, and can also be carried by a DCI format 2 3 in a common search space. The DCI format 2 3 can not only be used to trigger aperiodic SRS transmission, but also can be used to configure transmit power control (TPC) commands for SRSs on a group of UEs or a group of carriers.

Table 1: SRS trigger signaling

| Value of SRS request field | Triggered aperiodic SRS resource set(s) for DCI format 0_1, 1_0, and 2 3 configured with higher layer parameter srs-TPC-PDCCH-Group set to 'typeB' |
|---|---|
| 00 | No aperiodic SRS resource set triggered |
| 01 | SRS resource set(s) configured |
| | with higher layer parameter aperiodicSRS-ResourceTrigger set to 1 |

(continued)

| Value of SRS request field | Triggered aperiodic SRS resource set(s) for DCI format 0_1, 1_0, and 2 3 configured with higher layer parameter srs-TPC-PDCCH-Group set to 'typeB' |
|---|---|
| 10 | SRS resource set(s) configured with higher layer parameter aperiodicSRS-ResourceTrigger set to 2 |
| 11 | SRS resource set(s) configured with higher layer parameter aperiodicSRS-ResourceTrigger set to 3 |

In response to reception of the trigger signaling for triggering aperiodic SRS transmission, the terminal device performs SRS transmission on an SRS resource set indicated by the trigger signaling. A slot offset between the trigger signaling and the SRS transmission is configured by higher-layer signaling. A network device pre-indicates to the terminal device configuration parameters of each SRS resource set through high-layer signaling, including a time-frequency resource, a sequence parameter, a power control parameter, and the like. In addition, for each SRS resource (resource for short) in a triggered SRS resource set, the terminal device can also determine, according to spatial correlation information for the resource, a transmit beam used for SRS transmission on the resource, and the information is configured by RRC to each SRS resource.

2. Uplink antenna panel

A terminal device can include multiple antenna panels for uplink transmission. One panel includes a set of physical antennas, and each panel has a separate radio frequency channel. The terminal device needs to inform a network device of the number of configured antenna panels through a capability report. Meanwhile, the terminal device also needs to inform the network device whether the terminal device has a capability to transmit signals on multiple antenna panels simultaneously. Since channel conditions corresponding to different panels are different, different transmission parameters are adopted for different panels according to respective channel information of the panels. In order to obtain the transmission parameters, it is necessary to configure different SRS resources for different panels to obtain uplink channel information. For example, in order to perform uplink beam management, each panel can be configured with an SRS resource set, so that beam management is performed separately for each panel to determine a separate analog beam. In order to obtain precoding information used for PUSCH transmission, each panel can also be configured with an SRS resource set to obtain transmission parameters used for PUSCH transmission on the panel such as a beam, a precoding vector, and the number of transmission layers. Meanwhile, multi-panel transmission can also be applied to a physical uplink control channel (PUCCH), that is, information carried by a same PUCCH resource or carried by PUCCH resources on a same time-domain resource can be simultaneously transmitted to the network device through different panels. Each panel may have its own panel identifier (ID) used to correlate different signals transmitted on a same panel, that is, the terminal device can determine that signals associated with a same panel ID need to be transmitted on a same panel.

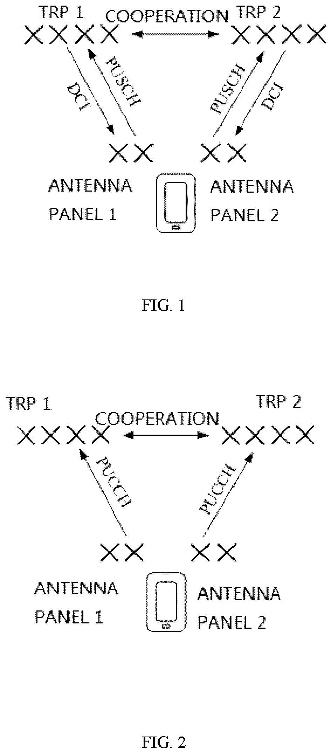

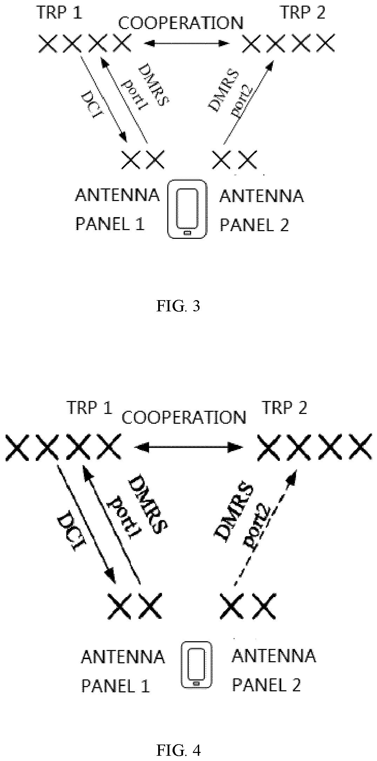

For ease of understanding, referring to FIGs. 1-4, FIGs. 1-4 illustrate different transmission processes on antenna panels of a terminal device. FIG. 1 is a schematic diagram illustrating PDSCH transmission based on multiple antenna panels, FIG. 2 is a schematic diagram illustrating PUCCH transmission based on multiple antenna panels, FIG. 3 is a schematic diagram illustrating multiple antenna panel transmission based on a single PUSCH, and FIG. 4 is a schematic diagram illustrating selected antenna panel transmission based on a single PUSCH.

3. Uplink PUSCH power control

At present, transmit power for a PUSCH can be calculated according to the following formula:

$$P_{\text{PUSCH},b,f,c}(i, j, q_d, l) = \min\left\{ \begin{array}{l} P_{\text{CMAX},f,c}(i), \\ P_{0\_\text{PUSCH},b,f,c}(j) + 10\log_{10}(2^{\mu} \cdot M_{\text{RB},b,f,c}^{\text{PUSCH}}(i)) + \\ \alpha_{b,f,c}(j) \cdot PL_{b,f,c}(q_d) + \Delta_{\text{TF},b,f,c}(i) + f_{b,f,c}(i, l) \end{array} \right\}$$

, where $P_{CAMX,f,c}(i)$ represents maximum transmit power on a current carrier for the terminal device, i represents an index of a PUSCH transmission, j represents an open-loop power control parameter index (including target power $P_{0\_PUSCH,b,f,c}(j)$ and a path loss factor $\alpha_{b,f,c}(j)$); $q_d$ represents an index of a reference signal used for path loss measurement, which is used to obtain a path loss value $PL_{b,f,c}(q_d)$, and is also an open-loop power control parameter; $f_{b,f,c}(i, l)$ represents a closed-loop power control adjustment state, where *l* represents an index of the closed-loop power control adjustment state. The terminal device determines a closed-loop power adjustment factor according to a TPC command field transmitted by the network device. The TPC command field may be carried by DCI used for PUSCH scheduling in a UE search space, or may be carried by an DCI format 2 2 used for carrying a group TPC command filed in a common search space. Closed-loop power control adjustment states corresponding to different closed-loop power control adjustment state indices are separately calculated, so that different PUSCH transmit power can be obtained.

In NR, the terminal device determines a transmit beam for a scheduled PUSCH based on an SRS resource indicator (SRI) in DCI, and also determines power control parameters used for the PUSCH based on the SRI. Specifically, the network device pre-configures multiple SRI-PUSCH-PowerControl parameter fields through RRC signaling, each parameter field corresponds to an SRI value, and the parameter field contains a set of PUSCH power control parameter configurations corresponding to the SRI value (for example, j, $q_d$, l). In the case where the SRI indicates different values, a power control parameter configuration in a corresponding parameter field (SRI-PUSCH-PowerControl) is used to determine transmit power for a currently scheduled PUSCH.

4. Uplink SRS power control

At present, transmit power for an SRS can be calculated according to the following formula:

$$P_{\text{SRS},b,f,c}(i,q_s,l) = \min \begin{cases} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{cases}$$

, where i represents an index of an SRS transmission, $q_s$ represents an SRS resource set, target power $P_{\text{O\_SRS},b,f,c}(q_s)$ and a path loss factor $\alpha_{\text{SRS},b,f,c}(q_s)$ represent open-loop power control parameters corresponding to the SRS resource set $q_s$; $q_d$ represents an index of a reference signal used for path loss measurement, is used to obtain a path loss value $PL_{b,f,c}(q_d)$, and is also an open-loop power control parameter; $h_{b,f,c}(i,l)$ represents a closed-loop power control adjustment state, where *l* represents an index of the closed-loop power control adjustment state, and each of different closed-loop power control adjustment state indices corresponds to a separate closed-loop power control adjustment state. The target power $P_{\text{O\_SRS},b,f,c}(q_s)$, the path loss factor $\alpha_{\text{SRS},b,f,c}(q_s)$, and $q_d$ are contained in configuration parameters for the SRS resource set, and are configured to the terminal device through high-layer signaling. $h_{b,f,c}(i,l)$ represents that a closed-loop power control adjustment state of a PUSCH can be reused, or a separate closed-loop power control adjustment state can be used, depending on RRC configuration. If RRC signaling configures that a same closed-loop power control adjustment state is adopted for an SRS and a PUSCH, index *l* of the reused closed-loop power control adjustment state of a PUSCH can be configured, that is, $h_{b,f,c}(i,l) = f_{b,f,c}(i,l)$. If the high-layer signaling configures that a closed-loop power control adjustment state for an SRS is independent of that of a PUSCH, the network device indicates to each terminal device a TPC command for an SRS through an DCI format 2 3 in a common search space, and the terminal device determines a closed-loop power control adjustment state according to the TPC command, which is not related to the closed-loop power control adjustment state of the PUSCH. At this point, the terminal device can only support one closed-loop power control adjustment state independent of a PUSCH. Further, the network device configures whether an accumulation mode or a non-accumulation mode is adopted for a current separate closed-loop power control adjustment state through higher-layer signaling. If the accumulation mode is adopted, the closed-loop power control adjustment state is determined by accumulating adjustment values indicated by TPC commands received within a certain time window on a previous value, for example,

$$h_{b,f,c}(i) = h_{b,f,c}(i-i_0) + \sum_{m=0}^{\mathcal{C}(S_i)-1} \delta_{\text{SRS},b,f,c}(m) .$$

If the non-accumulation mode is adopted, the closed-loop power control adjustment state is directly equal to an adjustment value indicated by a most recent TPC command received some time ago, i.e.,

$$h_{b,f,c}(i) = \delta_{\text{SRS},b,f,c}(i) .$$

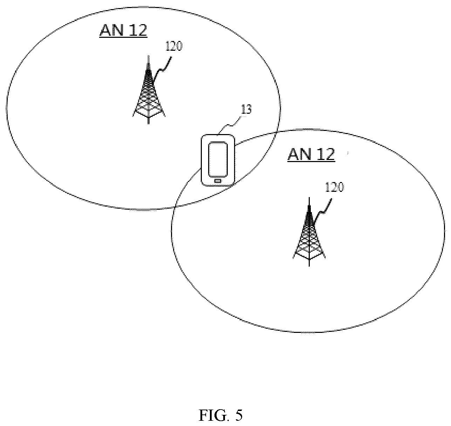

FIG. 5 is a block diagram illustrating a communication system provided in an exemplary implementation of the present disclosure. The communication system may include an access network (AN) 12 and a terminal device 13.

The AN 12 includes several network devices 120. The network device 120 may be a base station, and the base station is deployed in an access network to provide wireless communication functions for the terminal device. The base station may include various forms of macro base station, micro base station, relay station, access point and so on. In systems using different radio access technologies, names of devices with base station functions may vary. For example, in a long term evolution (LTE) system, the base station is called eNodeB or eNB; in a fifth generation (5G) new radio in unlicensed spectrum (NR-U) system, the base station is called gNodeB or gNB. As communication technology evolves, the illustration of "base station" may vary. For the convenience of illustrating implementations of the present disclosure, the above-mentioned devices for providing wireless communication functions for the terminal device 13 are collectively referred to as access network devices.

The terminal device 13 may include various devices with wireless communication functions such as handheld devices, vehicle-mounted devices, wearable devices, computing devices, or other processing devices connected to a wireless modem, as well as various forms of user equipment, mobile stations (MSs), terminal devices and so on. For the convenience of illustration, the devices mentioned above are collectively referred to as terminal devices. The AN device 120 and the terminal device 13 communicate with each other through a certain air interface technology, such as a Uu interface.

The technical solutions of implementations of the present disclosure can be applied to various communication systems, such as: a global system of mobile communication (GSM) system, a code division multiple access (CDMA) system, a wideband code division multiple access (WCDMA) system, general packet radio service (GPRS), an LTE system, an LTE frequency division duplex (FDD) system, an LTE time division duplex (TDD) system, an advanced long term evolution (LTE-A) system, an NR system, an evolution system of the NR system, an LTE-based access to unlicensed spectrum (LTE-U) system, an NR-U system, a universal mobile telecommunication system (UMTS), a worldwide interoperability for microwave access (WiMAX) communication system, a wireless local area network (WLAN), wireless fidelity (WiFi), a next-generation communication system or other communication systems.

Generally speaking, conventional communication systems support a limited number of connections and are easy to implement. However, with the development of communication technology, mobile communication systems not only support conventional communication, but also support, for example, device to device (D2D) communication, machine to machine (M2M) communication, machine type communication (MTC), vehicle to vehicle (V2V) communication, vehicle to everything (V2X) system, etc. Implementations of the present disclosure can also be applied to these communication systems.

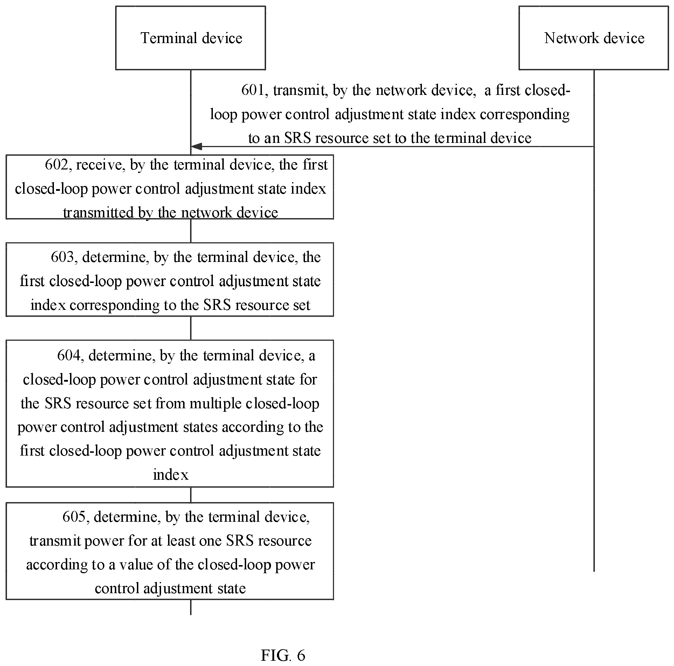

FIG. 6 is a flow chart illustrating a method for determining transmit power provided in an exemplary implementation of the present disclosure. The method is applied to the terminal device and the network device illustrated in FIG. 5 and includes at least part of the following contents.

At 601, the network device transmits a first closed-loop power control adjustment state index corresponding to an SRS resource set to the terminal device.

At 602, the terminal device receives the first closed-loop power control adjustment state index transmitted by the network device.

It is to be noted that, in implementations of the present disclosure the network device performing the operation at 601 and the terminal device performing the operation at 602 are taken as an example for illustration. In another implementation, the network device may not perform the operation at 601, and the terminal device does not perform the operation at 602 and may directly perform an operation at 603.

At 603, the terminal device determines the first closed-loop power control adjustment state index corresponding to the SRS resource set.

The first closed-loop power control adjustment state index is used to indicate a closed-loop power control adjustment state for the SRS resource set from multiple closed-loop power control adjustment states independent of a PUSCH. The SRS resource set includes at least one SRS resource. Optionally, if the terminal device is configured with at least two SRS resource sets, the SRS resource sets may correspond to a same first closed-loop power control adjustment state index or different first closed-loop power control adjustment state indices.

In an optional example, the first closed-loop power control adjustment state index has two functions: 1. Indicate the terminal device to reuse a closed-loop power control adjustment state of the PUSCH, or indicate the terminal device to use a closed-loop power control adjustment state independent of the PUSCH (the latter is taken as an example to illustrate the implementations). 2. Indicate the terminal device to determine the closed-loop power control adjustment state for the SRS resource set from multiple closed-loop power control adjustment states (same as closed-loop power control adjustment states of the PUSCH, or independent of the PUSCH).

For example, the first power control adjustment state index may indicate one of three candidate values: a first candidate value indicates that a current closed-loop power control adjustment state of the PUSCH is reused, a second candidate value indicates that a first closed-loop power control adjustment state independent of the PUSCH is adopted, and a third candidate value indicates that a second closed-loop power control adjustment state independent of the PUSCH is adopted.

For another example, the first power control adjustment state index may indicate one of four candidate values:

a first candidate value indicates that a first closed-loop power control adjustment state of the PUSCH is reused (e.g., $l=0$), a second candidate value indicates that a second closed-loop power control adjustment state of the PUSCH is reused (such as 1=1), a third candidate value indicates that the first closed-loop power control adjustment state independent of the PUSCH is adopted (such as 1=2), and a fourth candidate value indicates that the second closed-loop power control adjustment state independent of the PUSCH is adopted (such as 1=3).

For another example, the first power control adjustment state index may only be used to indicate which of the closed-loop power control adjustment states independent of the PUSCH is used. For example, the first candidate value indicates that the first separate closed-loop power control adjustment state is used, and the second candidate value indicates that the second separate closed-loop power control adjustment state is used.

In an implementation manner, multiple SRS resource sets used for obtaining downlink channel state information (CSI) or used for antenna switching correspond to a same first closed-loop power control adjustment state index.

For example, if the network device configures multiple SRS resource sets for obtaining downlink CSI or for antenna switching, the network device needs to configure multiple identical first closed-loop power control adjustment state indices for the multiple SRS resource sets, or configure one first closed-loop power control adjustment state index for the multiple SRS resource sets. In this case, the terminal device can determine a same first closed-loop power control adjustment state index for the multiple SRS resource sets, and determine the same first closed-loop power control adjustment state index as the first closed-loop power control adjustment state index corresponding to the multiple SRS resource sets.

At 604, the terminal device determines the closed-loop power control adjustment state for the SRS resource set from multiple closed-loop power control adjustment states according to the first closed-loop power control adjustment state index.

The first closed-loop power control adjustment state index is used to determine the closed-loop power control adjustment state for the SRS resource set. Therefore, after determining the first closed-loop power control adjustment state index corresponding to the SRS resource set, the terminal device can determine the closed-loop power control adjustment state indicated by the first closed-loop power control adjustment state index.

In the implementations, the multiple closed-loop power control adjustment states are independent of the PUSCH, that is, the multiple closed-loop power control adjustment states are different from the closed-loop power control adjustment states of the PUSCH.

Optionally, the terminal device determines the closed-loop power control adjustment state corresponding to the first closed-loop power control adjustment state index by querying a correspondence table, and the correspondence table contains a correspondence between closed-loop power control adjustment indices and closed-loop power control adjustment states.

Optionally, since each closed-loop power control adjustment state index corresponds to a closed-loop power control adjustment state, after the terminal device receives the first closed-loop power control adjustment state index, the terminal device can directly determine the closed-loop power control adjustment state corresponding to the first closed-loop power control adjustment state index.

For example, indices of the closed-loop power control adjustment state of the PUSCH is $l=\{0,1\}$, and indices of multiple SRS closed-loop power control adjustment states are $l=\{2,3\}$. If the first closed-loop power control adjustment state index received by the terminal device is 2, the terminal device determines that the closed-loop power control adjustment state corresponding to the first closed-loop power control adjustment state index is the first closed-loop power control adjustment state independent of the PUSCH.

Optionally, a first quantity of the multiple closed-loop power control adjustment states is larger than 1. If the first quantity of the closed-loop power control adjustment states is larger than 1, the method provided in implementations of the present disclosure can be used, i.e., according to the first closed-loop power control adjustment state index, determine the closed-loop power control adjustment state for the SRS resource set from the multiple closed-loop power control adjustment states.

In a possible example, the network device transmits the first quantity of the closed-loop power control adjustment states independent of the PUSCH to the terminal device. After the terminal device receives the first quantity and determines that the first quantity is larger than 1, the method provided in implementations of the present disclosure can be adopted to determine the closed-loop power control adjustment state for the SRS resource set from the multiple closed-loop power control adjustment states.

It is to be noted that if the first quantity of the closed-loop power control adjustment states independent of the PUSCH is equal to 1, the terminal device can directly determine the unique closed-loop power control adjustment state as the closed-loop power control adjustment state for the SRS resource set.

At 605, the terminal device determines transmit power for the at least one SRS resource according to a value of the closed-loop power control adjustment state.

After the terminal device obtains the closed-loop power control adjustment state for the SRS resource set, the terminal device can determine the value of the closed-loop power control adjustment state, and then determine the transmit power for the at least one SRS resource according to the determined value of the closed-loop power control adjustment state.

In addition, for a manner in which the transmit power for the SRS resource is determined, reference can be made to the uplink SRS power control in the glossary, which will not be repeated here.

It is to be noted that since in implementations of the present disclosure the closed-loop power control adjustment state for the SRS resource set is determined, and the SRS resource set includes the at least one SRS resource, when the terminal device determines transmit power for each SRS resource in the SRS resource set, the closed-loop power control adjustment state for the SRS resource set is adopted.

In the method provided in implementations of the present disclosure, the first closed-loop power control adjustment state index corresponding to the SRS resource set is determined, and then according to the first closed-loop power control adjustment state index, the closed-loop power control adjustment state for the SRS resource set is determined from the multiple closed-loop power control adjustment states. The transmit power for the at least one SRS resource in the SRS resource set is determined according to the value of the closed-loop power control adjustment state. A new method for determining transmit power for an SRS resource is provided. The terminal device can determine respective closed-loop power control adjustment states for different SRS resource sets (such as SRS resource sets for different antenna panels), and then can determine transmit power for each SRS resource set, thereby improving an accuracy of transmit power control.

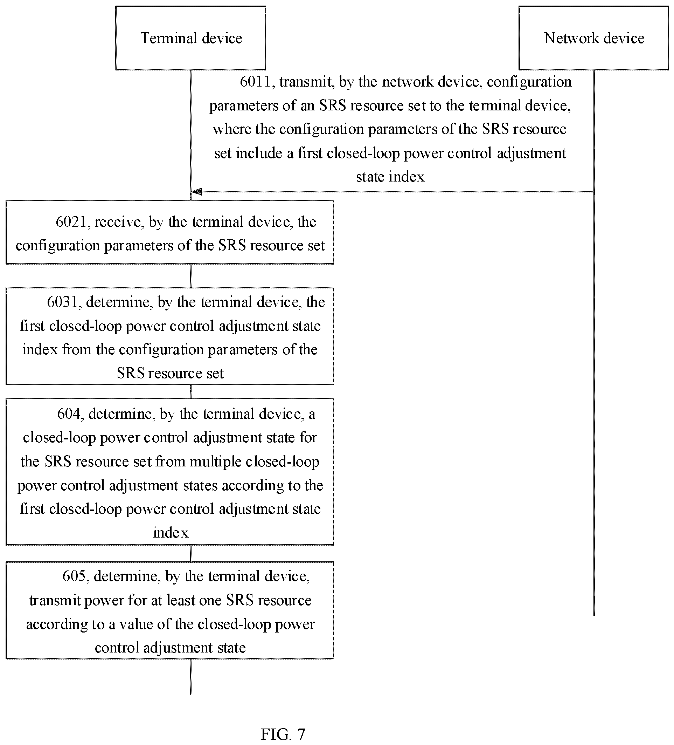

In an alternative implementation based on FIG. 6, FIG. 7 is a flow chart illustrating a method for determining transmit power provided in an exemplary implementation of the present disclosure. In the implementation, the operation at 601 is replaced with an operation at 6011, the operation at 602 is replaced with an operation at 6021, and the operation at 603 is replaced with an operation at 6031.

At 6011, the network device transmits configuration parameters of an SRS resource set to the terminal device, where the configuration parameters of the SRS resource set include a first closed-loop power control adjustment state index.

At 6021, the terminal device receives the configuration parameters of the SRS resource set.

At 6031, the terminal device determines the first closed-loop power control adjustment state index from the configuration parameters of the SRS resource set.

In the process that the network device configures the configuration parameters of the SRS resource set for the terminal device, the network device adds the first closed-loop power control adjustment state index to the configuration parameters of the SRS resource set. Since the configuration parameters of the SRS resource set includes the first closed-loop power control adjustment state index, after the terminal device receives the configuration parameters of the SRS resource set transmitted by the network device, the terminal device can determine the first closed-loop power control adjustment state index from the configuration parameters of the SRS resource set.

In the method provided in implementations of the present disclosure, by means of adding the first closed-loop power control adjustment state index to the configuration parameters of the SRS resource set, signaling overhead for indicating the first closed-loop power control adjustment state index can be reduced.

In implementations, the configuration parameters of the SRS resource set may include the following.

```
SRS-ResourceSet ::=            SEQUENCE {
    srs-ResourceSetId              SRS-ResourceSetId,

    ...

    p0      INTEGER (-202..24)   OPTIONAL, -- Cond Setup
    pathlossReferenceRS               CHOICE {
        ssb-Index                 SSB-Index,
        csi-RS-Index                  NZP-CSI-RS-ResourceId
    }        OPTIONAL, -- Need M

    srs-PowerControlAdjustmentStates      ENUMERATED { sameAsFci2, separateClosedLoop1,
separateClosedLoop2}         OPTIONAL, -- Need S
        ...
    }
```

srs-PowerControlAdjustmentStates is used to indicate the first closed-loop power control adjustment state index, and separateClosedLoop1 and separateClosedLoop2 correspond to different index values respectively.

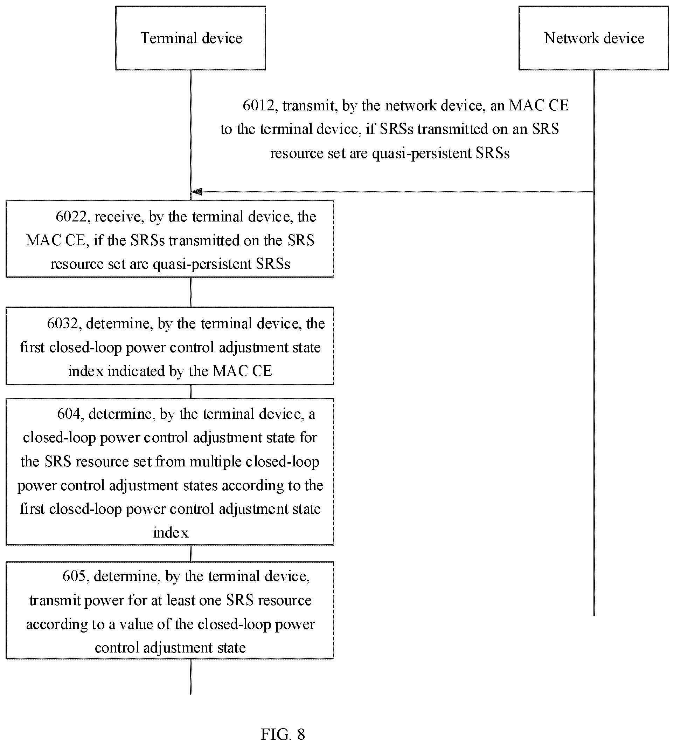

In an alternative implementation based on FIG. 6, FIG. 8 is a flow chart illustrating a method for determining transmit power provided in an exemplary implementation of the present disclosure. In the implementation, the operation at 601 is replaced with an operation at 6012, the operation at 602 is replaced with an operation at 6022, and the operation at 603 is replaced with an operation at 6032.

At 6012, the network device transmits a medium access control control element (MAC CE) to the terminal device, if SRSs transmitted on an SRS resource set are semi-persistent SRSs.

When the MAC CE activates the SRS resource set, the MAC CE also indicates a first closed-loop power control adjustment state index corresponding to the SRS resource set activated.

If the SRSs transmitted on the SRS resource set are semi-persistent SRSs, the network device transmits the MAC CE to the terminal device. The terminal device receives the MAC CE transmitted by the network device, and starts to periodically transmit the SRSs, where the MAC CE is used to activate the SRS resource set.

Optionally, the MAC CE is further used to indicate a power control parameter for the SRS resource set, and the power control parameter includes the first closed-loop power control adjustment state index.

At 6022, the terminal device receives the MAC CE, if the SRSs transmitted on the SRS resource set are semi-persistent SRSs.

At 6032, the terminal device determines the first closed-loop power control adjustment state index indicated by the MAC CE.

Since the MAC CE transmitted by the network device for activating the SRS resource set includes the first closed-loop power control adjustment state index, when the terminal device receives the MAC CE and the MAC CE contains the first closed-loop power control adjustment state index, the terminal device can directly determine the first closed-loop power control adjustment state index indicated by the MAC CE.

In the method provided in implementations of the present disclosure, the first closed-loop power control adjustment state index is contained in the MAC CE that indicates the terminal device to activate the SRS resource set. When the terminal device receives the MAC CE, the terminal device can determine the first closed-loop power control adjustment state index indicated by the MAC CE, without additional signaling.

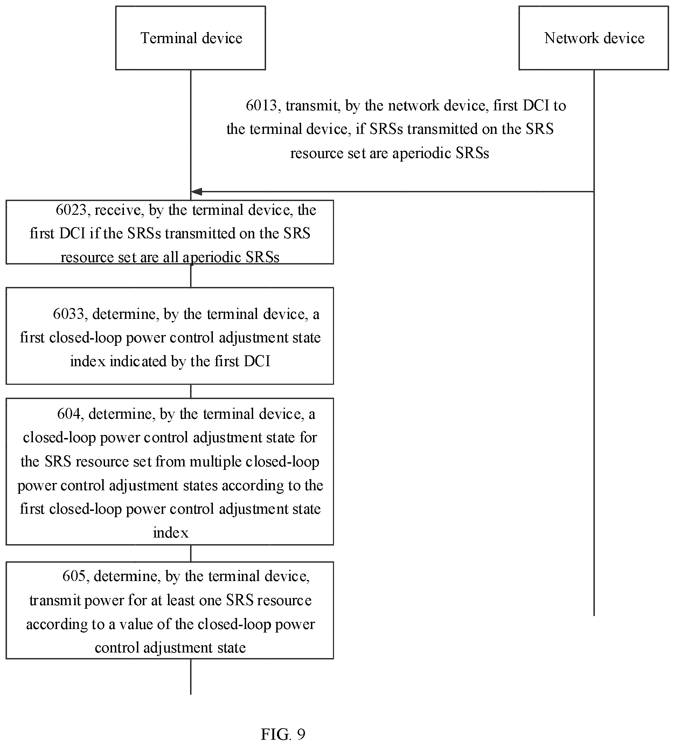

In an alternative implementation based on FIG. 6, FIG. 9 is a flow chart illustrating a method for determining transmit power provided in an exemplary implementation of the present disclosure. In the implementation, the operation at 601 is replaced with an operation at 6013, the operation at 602 is replaced with an operation at 6023, and the operation at 603 is replaced with an operation at 6033.

At 6013, the network device transmits first DCI to the terminal device, if SRSs transmitted on the SRS resource set are aperiodic SRSs.

If the SRSs transmitted on the SRS resource set are aperiodic SRSs, the network device transmits the first DCI to the terminal device, where the first DCI is used to trigger the aperiodic SRSs.

In addition, the network device may further cause the first DCI to carry an indication indicating a first closed-loop power control adjustment state index.

At 6023, receive the first DCI if the SRSs transmitted on the SRS resource set are all aperiodic SRSs.

At 6033, the terminal device determines the first closed-loop power control adjustment state index indicated by the first DCI.

Since the first DCI carries the indication indicating the first closed-loop power control adjustment state index, when the terminal device receives the first DCI transmitted by the network device, the terminal device can determine the first closed-loop power control adjustment state index indicated by the first DCI.

Optionally, the first DCI directly indicates the first closed-loop power control adjustment state index. In response to reception of the first DCI, the terminal device can determine a first closed-loop power control adjustment state for the SRS resource set according to the indication in the first DCI.

For example, in the case where the terminal device supports 4 different closed-loop power control adjustment states, a 2-bit signaling indication can be used in the first DCI. 00 is used to indicate a first closed-loop power control adjustment state. 01 is used to indicate a second closed-loop power control adjustment state. 10 is used to indicate a third closed-loop power control adjustment state. 11 is used to indicate a fourth closed-loop power control adjustment state.

Optionally, the network device configures a closed-loop power control adjustment state set for the terminal device in advance, and the first DCI is used to indicate the first closed-loop power control adjustment state index corresponding to the SRS resource set from the closed-loop power control adjustment state set.

The closed-loop power control adjustment state set is configured by the network device through RRC signaling or MAC signaling.

In response to reception of the RRC signaling or MAC signaling transmitted by the network device, the terminal device can determine the closed-loop power control adjustment state set to be used. In response to reception of the first DCI, the terminal device can determine the first closed-loop power control adjustment state index indicated by the first DCI, and then determine the closed-loop power control adjustment state for the SRS resource set from the closed-loop power control adjustment state set.

In a possible implementation manner, in response to reception of the RRC signaling or MAC signaling configured by the network device, the terminal device can determine whether to reuse a closed-loop power control adjustment state of a PUSCH or adopt a separate closed-loop power control adjustment state, and then according to the first DCI received, the terminal device can determine the closed-loop power control adjustment state for the SRS resource set.

For example, closed-loop power control adjustment states of the PUSCH include closed-loop power control adjustment state 1 and closed-loop power control adjustment state 2. Closed-loop power control adjustment states independent of the PUSCH include closed-loop power control adjustment state 3 and closed-loop power control adjustment state 4. If the RRC signaling configured by the network device is used to indicate the terminal device to use a separate closed-loop power control adjustment state, the terminal device can determine to use a set of separate closed-loop power control adjustment states in response to reception of the RRC signaling. When the first DCI is received again, 1 bit in the first DCI can indicate that a certain closed-loop power control adjustment state specified in the set of separate closed-loop power control adjustment states is used. Specifically, if the bit in the first DCI is 0, it is determined that closed-loop power control adjustment state 3 is the closed-loop power control adjustment state for the SRS resource set, and if the bit in the first DCI is 1, it is determined that closed-loop power control adjustment state 4 is the closed-loop power control adjustment state for the SRS resource set.

According to the method provided in implementations of the present disclosure, the terminal device can determine the first closed-loop power control adjustment state index according to the first DCI received, and then the terminal device can determine different closed-loop power control adjustment states for the SRS resource set according to different closed-loop power control adjustment state indices indicated by the first DCI at different times, thereby dynamically indicating closed-loop power control adjustment states, and improving an accuracy of controlling transmit power for SRSs.

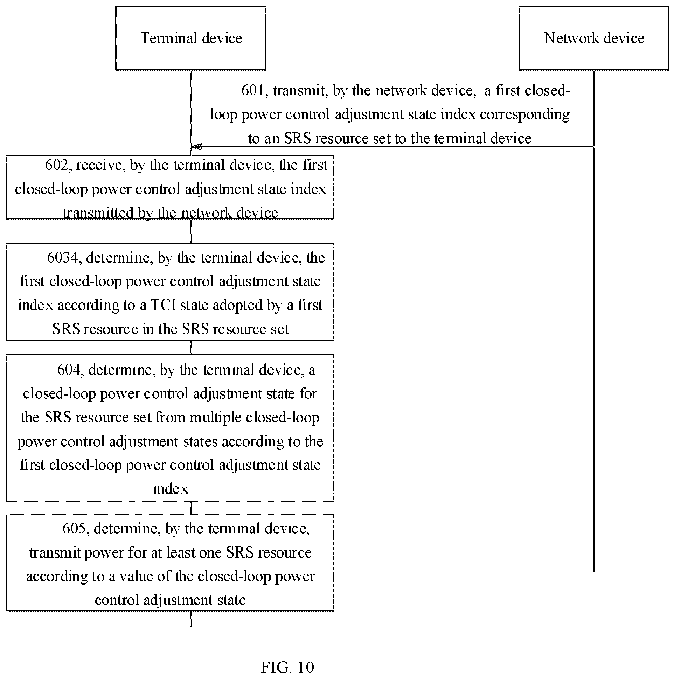

In an alternative implementation based on FIG. 6, FIG. 10 is a flow chart illustrating a method for determining transmit power provided in an exemplary implementation of the present disclosure. In the implementation, the operation at 603 is replaced with an operation at 6034.

At 6034, the terminal device determines the first closed-loop power control adjustment state index according to a transmission configuration indication (TCI) state adopted by a first SRS resource in the SRS resource set.

After the network device configures for the terminal device TCI states respective for the multiple SRS resources in the SRS resource set, when the terminal device determines the first closed-loop power control adjustment state index corresponding to the SRS resource set, the terminal device can determine the first SRS resource from the SRS resource set, and then determine the first closed-loop power control adjustment state index according to the TCI state adopted by the first SRS resource.

Optionally, the terminal device determines the TCI state adopted by the first SRS resource in the SRS resource set, and determines a closed-loop power control adjustment state index corresponding to the TCI state as the first closed-loop power control adjustment state index.

When the terminal device determines the closed-loop power control adjustment state for the SRS resource set, the terminal device first determines the first SRS resource from the SRS resource set, then determines the TCI state used by the first SRS resource, and then determines the closed-loop power control adjustment state index corresponding to the TCI state as the closed-loop power control adjustment state index corresponding to the SRS resource set.

In an implementation design, the network device transmits first higher-layer signaling for TCI state configuring to the terminal device, where the first higher-layer signaling contains the closed-loop power control adjustment state index corresponding to the TCI state.

For example, the first higher-layer signaling transmitted by the network device to the terminal device contains M TCI states, and configuration information of each TCI state contains configuration of the TCI state, and also contains information of power control parameters corresponding to the TCI state. The information of the power control parameters includes a closed-loop power control adjustment state index.

The first higher layer signaling may be RRC signaling or MAC signaling.

Optionally, the terminal device determines a TCI state ID of the TCI state adopted by the first SRS resource in the SRS resource set, and determines a closed-loop power control adjustment state index corresponding to the TCI state ID as the first closed-loop power control adjustment state index corresponding to the SRS resource set.

In an implementation design, the network device configures for the terminal device a TCI state of each SRS resource in the SRS resource set through any higher-layer signaling, and then transmits second higher-layer signaling to the terminal device. In response to reception of the second higher-layer signaling, according to a correspondence between TCI state IDs of TCI states and closed-loop power control adjustment state indices in the second higher-layer signaling, the terminal device determines the closed-loop power control adjustment state index corresponding to the TCI state, and determines the closed-loop power control adjustment state index corresponding to the TCI state as the first closed-loop power control adjustment state index.

The second higher-layer signaling is used to indicate the correspondence between TCI state IDs of TCI states and closed-loop power control adjustment state indices. The second higher-layer signaling may be RRC signaling or MAC signaling.

For example, the network device configures the M TCI states through any higher-layer signaling, and then transmits the second higher-layer signaling to the terminal device. The second higher-layer signaling contains closed-loop power control adjustment state indices respectively corresponding to TCI state IDs of the M TCI states.

The first SRS resource is an earliest transmitted SRS resource in the SRS resource set, or the first SRS resource is a lowest SRS resource in the SRS resource set.

In another implementation design, a value of the TCI state ID of the TCI state has an agreed correspondence with the first closed-loop power control adjustment state. The terminal device directly determines the first closed-loop power control adjustment state index corresponding to the TCI state according to the value of the TCI state ID of the TCI state for the first SRS resource.

The first point that needs to be explained is that in implementations of the present disclosure, take merely that different TCI states used by the SRS resource set correspond to different closed-loop power control adjustment state indices as an example for illustration. In other implementations, TCI states adopted by all SRS resources in the SRS resource set correspond to a same closed-loop power control adjustment state index.

Different SRS resources in the SRS resource set can adopt different TCI states, and the different TCI states correspond to a same closed-loop power control adjustment state index, then the terminal device can determine, according to the TCI states adopted by the different SRS resources in the SRS resource set, that the TCI states correspond to the same closed-loop power control adjustment state index. In the method provided in implementations of the present disclosure, support that one SRS resource set corresponds to only one first closed-loop power control adjustment state index, thereby ensuring that power for the SRS resource set does not change, and achieving relatively accurate beam management and antenna switching.

When the TCI states used by the different SRS resources in the SRS resource set correspond to the same closed-loop power control adjustment state index, the terminal device directly determines a closed-loop power control adjustment state corresponding to a TCI state used by any SRS resource in the SRS resource set as the first closed-loop power control adjustment state for the SRS resource set.

It is to be noted that one SRS resource set can be used for SRS transmission on one uplink antenna panel, and a same uplink antenna panel corresponds to one SRS resource set, then a same closed-loop power control adjustment state can be used. Different uplink antenna panels can use different closed-loop power control adjustment states, thereby realizing separate SRS closed-loop power control for each uplink antenna panel.

According to the method provided in implementations of the present disclosure, the terminal device can determine the first closed-loop power control adjustment state index corresponding to the SRS resource set according to the TCI state adopted by the first SRS resource in the SRS resource set. The terminal device can determine a first closed-loop power control adjustment state index corresponding to each of different SRS resource sets according to SRS resources in each of the different SRS resource sets, thereby realizing control of transmit power for each SRS resource set and improving the accuracy.

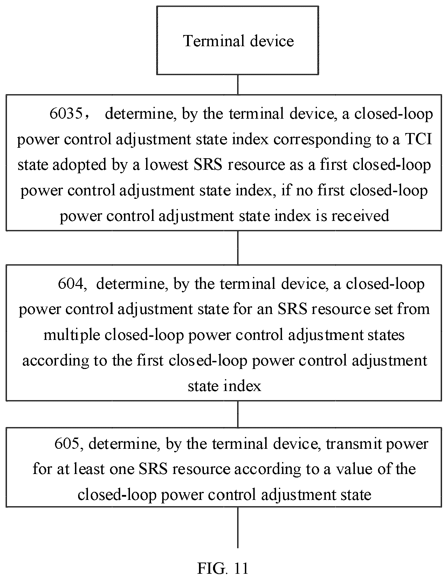

The second point that needs to be explained is that in implementations of the present disclosure, take merely that the network device transmits the first closed-loop power control adjustment state index to the terminal device as an example for illustration. In another implementation, the operation at 601-602 may not be performed. FIG. 11 is a flow chart illustrating a method for determining transmit power provided in an exemplary implementation of the present disclosure. In the implementation, the operation at 603 is replaced with an operation at 6035.

At 6035, if a first configuration information for configuring a first closed-loop power control adjustment state index is not received, the terminal device determines a lowest SRS closed-loop power control adjustment state index as the first closed-loop power control adjustment state index.

Optionally, the terminal device selects a closed-loop power control adjustment state index with a lowest value from the closed-loop power control adjustment state indices independent of a PUSCH.

For example, in the case where closed-loop power control adjustment state indices independent of the PUSCH include {2, 3}, the terminal device determines a closed-loop power control adjustment state index with a value of 2 as the first closed-loop power control adjustment state index corresponding to the SRS resource set.

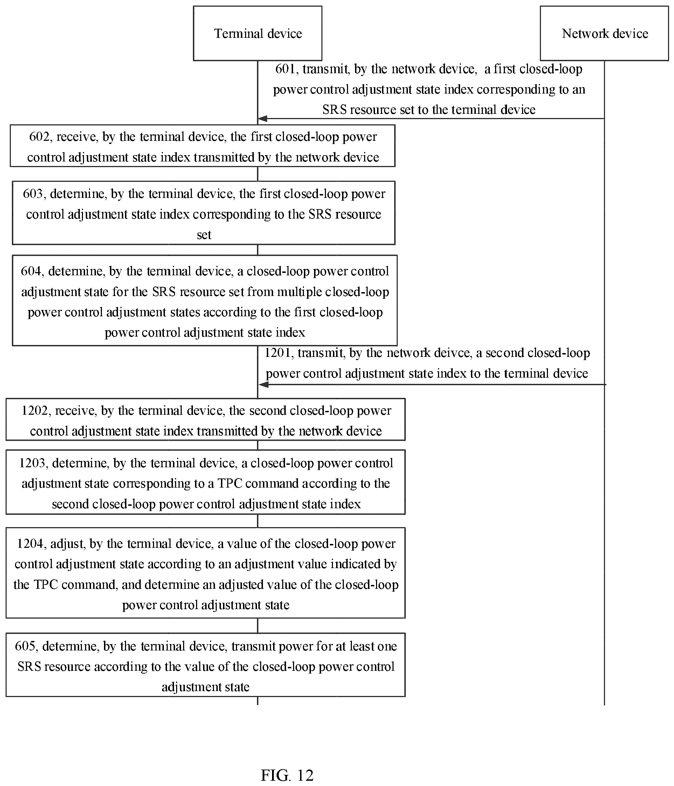

In an optional implementation based on FIG. 6, FIG. 12 is a flow chart illustrating a method for determining transmit power provided in an exemplary implementation of the present disclosure. The method is applied to the terminal device and the network device illustrated in FIG. 5. The method includes at least part of the following.

At 1201, the network device transmits a second closed-loop power control adjustment state index to the terminal device.

At 1202, the terminal device receives the second closed-loop power control adjustment state index transmitted by the network device.

At least two SRS resource sets can be configured for the terminal device, for example, a first SRS resource set is used for SRS transmission on uplink antenna panel 1, and a second SRS resource set is used for SRS transmission on uplink antenna panel 2. A closed-loop power control adjustment state configured for the first SRS resource set is different from that configured for the second SRS resource set. When the terminal device receives a TPC command, the terminal device needs to ensure whether the TPC command is to adjust the closed-loop power control adjustment state for the first SRS resource set or the closed-loop power control adjustment state for the second SRS resource set.

The second closed-loop power control adjustment state index is used to indicate a closed-loop power control adjustment state corresponding to the TPC command. After the terminal device determines the second closed-loop power control adjustment state index, the terminal device can determine a closed-loop power control adjustment state to be adjusted by the corresponding TPC command, so as to adjust the closed-loop power control adjustment state corresponding to an SRS resource set.

The terminal device receives the second closed-loop power control adjustment state index transmitted by the network device, that is, the terminal device determines the second closed-loop power control adjustment state index, and subsequently the terminal device determines the closed-loop power control adjustment state corresponding to the TPC command according to the second closed-loop power control adjustment state index.

Optionally, the network device transmits second configuration information to the terminal device, the terminal device receives the second configuration information, and subsequently the terminal device can determine the second closed-loop power control adjustment state index according to the second configuration information.

In an implementation design, the terminal device obtains the second closed-loop power control adjustment state index from configuration information of at least one TPC command block.

The second configuration information is used to configure a corresponding second closed-loop power control adjustment state index for at least one TPC command block in second DCI.

In an implementation design, the second configuration information is used to configure different second closed-loop power control adjustment state indices for different TPC command blocks, and different TPC commands in one TPC command block use a same second closed-loop power control adjustment state index.

In another implementation design, the terminal device obtains the second closed-loop power control adjustment state index from configuration information for at least one TPC command in the at least one TPC command block.

The second configuration information is used to configure a corresponding second closed-loop power control adjustment state index for the at least one TPC command in the at least one TPC command block in the second DCI.

The second configuration information is used to configure different second closed-loop power control adjustment state indices for different TPC commands in a TPC command block.

Additionally, the second DCI includes at least one TPC command block for SRSs. The terminal device can determine, according to other higher-layer signaling, a TPC command block for the terminal device from the second DCI.

In another implementation design, the network device can configure a corresponding second closed-loop power control adjustment state index for all TPC command blocks in the second DCI. At this point, the second DCI needs to indicate only one second closed-loop power control adjustment state index, and the second closed-loop power control adjustment state index is used for all the TPC command blocks in the second DCI.

In a possible implementation manner, a TPC command for SRSs includes two types, namely type A and type B, respectively.

When the TPC type for SRSs is type A, the following two manners are also included.

Manner 1: Configure a second closed-loop power control adjustment state index for each TPC command block, and the second closed-loop power control adjustment state index is used for all TPC commands in the TPC command block.

For example, a TPC command block includes:

- SRS trigger signaling (0 or 2 bits);
- TPC command 1, TPC command 2, ..., TPC command N;
- closed-loop power control adjustment state index indication (0 or 1 bit);

Manner 2: Each TPC command in a TPC command block is configured with a second closed-loop power control adjustment state index.

For example, a TPC command block includes:

- SRS trigger signaling (0 or 2 bits);
- TPC command 1, index 1, TPC command 2, index 2,... , TPC command N, index N, where index N represents a second closed-loop power control adjustment state index corresponding to TPC command N

When the TPC type for SRSs is type B, each TPC command block contains a second closed-loop power control adjustment state index used for TPC commands in the TPC command block.

For example, a TPC command block includes:

- SRS trigger signaling (0 or 2 bits);
- TPC command (2 bits);
- Closed-loop power control antenna aspect state index indication (0 or 1 bit).

At 1203, the terminal device determines a closed-loop power control adjustment state corresponding to the TPC command according to the second closed-loop power control adjustment state index.

After the terminal device determines the second closed-loop power control adjustment state index, the terminal device can determine the closed-loop power control adjustment state corresponding to the TPC command according to the second closed-loop power control adjustment state index.

It is to be noted that an execution order of the operations at 1201-1023 and the operations at 601-604 provided in implementations of the present disclosure is not limited, and what is needed is that the operations at 1201-1203 and the operations at 601-604 are executed before the operation at 605.

It is to be noted that in implementations of the present disclosure, take only that determine the closed-loop power control adjustment state corresponding to the TPC command according to the second closed-loop power control adjustment state index as an example for illustration. In another implementation, the terminal device resets the closed-loop power control adjustment state for the SRS resource set in response to reception of third higher-layer signaling for target power or a path loss factor for the SRS resource set.

For an SRS resource set, when the terminal device receives the third higher-layer signaling for configuring the target power $P_{O\_SRS,b,f,c}(q_s)$ or path loss factor $\alpha_{SRS,b,f,c}(q_s)$ for the SRS resource set, the terminal device resets the closed-loop power control adjustment state for the SRS resource set, and sets a value of $h_{b,f,c}(i,l)$ to be zero.

It is to be noted that when the terminal device is configured with multiple closed-loop power control adjustment states, the terminal device can set, according to the received third higher-layer signaling for the target power or path loss factor, a value of the closed-loop power control adjustment state for the SRS resource set corresponding to the third higher-layer signaling to be zero.

Moreover, the method can only be used in a case where a closed-loop power control mode for SRSs is configured as an accumulation mode.

In the method provided in implementations of the present disclosure, upon receiving the third higher-layer signaling for configuring the target power or path loss factor for the SRS resource set, only the closed-loop power control adjustment state for the SRS resource set corresponding to the target power or path loss factor is reset, and other closed-loop power control adjustment states are not affected, thereby realizing separate adjustment of closed-loop transmit power.

At 1204, the terminal device adjusts the value of the closed-loop power control adjustment state corresponding to the TPC command according to an adjustment value indicated by the TPC command, and determines an adjusted value of the closed-loop power control adjustment state.

After the terminal device determines the closed-loop power control adjustment state corresponding to the TPC command, the terminal device can adjust the closed-loop power control adjustment state corresponding to the TPC command according to the adjustment value indicated by the TPC command, and determine the adjusted value of the closed-loop power control adjustment state.

Optionally, when the SRS closed-loop power control mode is the accumulation mode, on the basis of the current value of the closed-loop power control adjustment state, the adjustment value indicated by the TPC command is accumulated, and then the adjusted value of the closed-loop power adjustment state is determined.

In a possible implementation manner, in the case where transmit power corresponding to the closed-loop power control adjustment state corresponding to the TPC command (that is, current transmit power obtained according to the closed-loop power control adjustment state corresponding to the TPC command, that is, transmit power obtained by previous adjustment) has reached maximum transmit power, and the adjustment value indicated by the TPC command is positive, it is determined that the value of the closed-loop power control adjustment state corresponding to the TPC command remains unchanged, that is, the adjustment value indicated by the command does not need to be accumulated.

In the case where the transmit power corresponding to the closed-loop power control adjustment state corresponding to the TPC command is the maximum transmit power, and the adjustment value is positive, the terminal device can no longer further increase the transmit power, so the terminal device no longer adjusts the transmit power, and the terminal device uses the maximum transmit power.

In another possible implementation manner, in the case where the transmit power corresponding to the closed-loop power control adjustment state corresponding to the TPC command has reached the minimum transmit power, and the adjustment value indicated by the TPC command is negative, it is determined that the value of the closed-loop power control adjustment state corresponding to the TPC command remains unchanged, that is, the adjustment value indicated by the TPC command does not need to be accumulated.

In the case where the transmit power corresponding to the closed-loop power control adjustment state corresponding to the TPC command is the minimum transmit power, and the adjustment value is negative, the terminal device can no longer reduce the transmit power, so the terminal device no longer adjusts the transmit power, and the terminal device uses the minimum transmit power.

Optionally, when the current closed-loop power control mode is a non-accumulation mode, the adjustment value indicated by the TPC command is determined as the value of the closed-loop power control adjustment state.

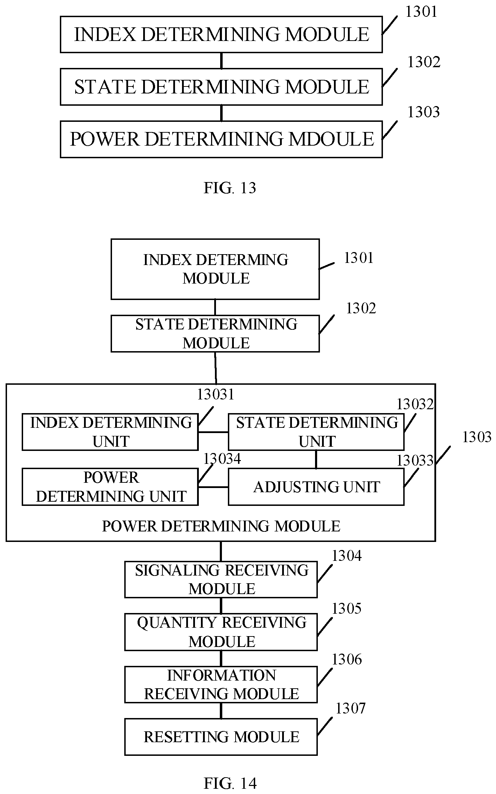

FIG. 13 is a block diagram illustrating a communication apparatus provided in an exemplary implementation of the present disclosure. The apparatus is applied to a terminal device illustrated in FIG. 5. The apparatus includes an index determining module 1301, a state determining module 1302, and a power determining module 1303.

The index determining module 1301 is configured to determine a first closed-loop power control adjustment state index corresponding to an SRS resource set, where the first closed-loop power control adjustment state index is used to indicate a closed-loop power control adjustment state for the SRS resource set, and the SRS resource set includes at least one SRS resource.

The state determining module 1302 is configured to determine the closed-loop power control adjustment state for the SRS resource set from multiple closed-loop power control adjustment states, according to the first closed-loop power control adjustment state index, where the closed-loop power control adjustment states are independent of a PUSCH.

The power determining module 1303 is configured to determine transmit power for the at least one SRS resource according to a value of the closed-loop power control adjustment state.

In an implementation, the index determining module 1301 is further configured to determine the first closed-loop power control adjustment index from configuration parameters of the SRS resource set; determine, on condition that SRSs transmitted on the SRS resource set are semi-persistent SRSs, the first closed-loop power control adjustment state index indicated by an MAC CE from the MAC CE for activating the SRS resource set; determine, on condition that the SRSs transmitted on the SRS resource set are aperiodic SRSs, the first closed-loop power control adjustment state index indicated by first DCI from the first DCI for triggering the aperiodic SRSs; or determine the first closed-loop power control adjustment state index according to a TCI state adopted by a first SRS resource in the SRS resource set.

In an implementation, the index determining module 1301 is further configured to determine the TCI state adopted by the first SRS resource in the SRS resource set, and determine a closed-loop power control adjustment state index corresponding to the TCI state as the first closed-loop power control adjustment state index.

In an implementation, the apparatus further includes a signaling receiving module 1304. The signaling receiving module 1304 is configured to receive first higher-layer signaling for TCI state configuring, where the first higher-layer signaling contains the closed-loop power control adjustment state index corresponding to the TCI state. Alternatively, the signaling receiving module 1304 is configured to receive second higher-layer signaling, where the second higher-layer signaling is used to indicate a correspondence between TCI state IDs of TCI states and closed-loop power control adjustment state indices; determine the closed-loop power control adjustment state index corresponding to the TCI state according to a TCI state ID of the TCI state and the correspondence; and determine the closed-loop power control adjustment state index as the first closed-loop power control adjustment state index.

In an implementation, the first SRS resource is an earliest transmitted SRS resource in the SRS resource set, or the first SRS resource is an SRS resource with a lowest SRS resource ID in the SRS resource set.

In an implementation, TCI states adopted by different SRS resources in the SRS resource set correspond to a same closed-loop power control adjustment state index.

In an implementation, the index determining module 1301 is further configured to determine a lowest closed-loop power control adjustment state index as the first closed-loop power control adjustment state index on condition that a first configuration information for configuring the first closed-loop power control adjustment state index is not received.

In an implementation, referring to FIG. 14, the apparatus further includes a quantity receiving module 1305 configured to receive quantity of closed-loop power control adjustment states independent of the PUSCH configured by a network device, where the quantity of the closed-loop power control adjustment states is larger than 1.

In an implementation, referring to FIG. 14, the power determining module 1303 includes an index determining unit 13031 and a state determining unit 13032.

The index determining unit 13031 is configured to determine a second closed-loop power control adjustment state index, where the second closed-loop power control adjustment state index is used to determine a closed-loop power control adjustment state corresponding to a TPC command from the multiple closed-loop power control adjustment states, and the closed-loop power control adjustment states are independent of the PUSCH.

The state determining unit 13032 is configured to determine the closed-loop power control adjustment state corresponding to the TPC command for SRSs according to the second closed-loop power control adjustment state index.

The adjusting unit 13033 is configured to determine a value of the closed-loop power control adjustment state corresponding to the TPC command according to an adjustment value indicated by the TPC command.

The power determining unit 13034 is configured to determine the transit power for the at least one SRS resource according to the value of the closed-loop power control adjustment state.

In an implementation, referring to FIG. 14, the apparatus further includes an information receiving module 1306 configured to receive second configuration information from the network device, where the second configuration information is used to configure a second closed-loop power control adjustment state index for at least one TPC command block in second DCI, or the second configuration is used to configure a second closed-loop power control adjustment state index for at least one TPC command in the at least one TPC command block in the second DCI, where the second DCI includes the at least one TPC command block for SRSs.

In an implementation, the adjusting unit 13033 is configured to determine that the value of the closed-loop power control adjustment state remains unchanged on condition that transmit power corresponding to the closed-loop power control adjustment state corresponding to the TPC command is maximum transmit power and the adjustment value is positive.

In an implementation, the adjusting unit 13033 is configured to determine that the value of the closed-loop power control adjustment state remains unchanged on condition that the transmit power corresponding to the closed-loop power control adjustment state corresponding to the TPC command is minimum transmit power and the adjustment value is negative.

In an implementation, referring to FIG. 14, the apparatus further includes a resetting module 1307. The resetting module 1307 is configured to reset the closed-loop power control adjustment state corresponding to the SRS resource set in response to reception of third higher-layer signaling for configuring target power or a path loss factor for the SRS resource set.

In an implementation, the index determining module 1301 is configured to determine a same first closed-loop power control adjustment state index for multiple SRS resource sets used for obtaining CSI or used for antenna switching.

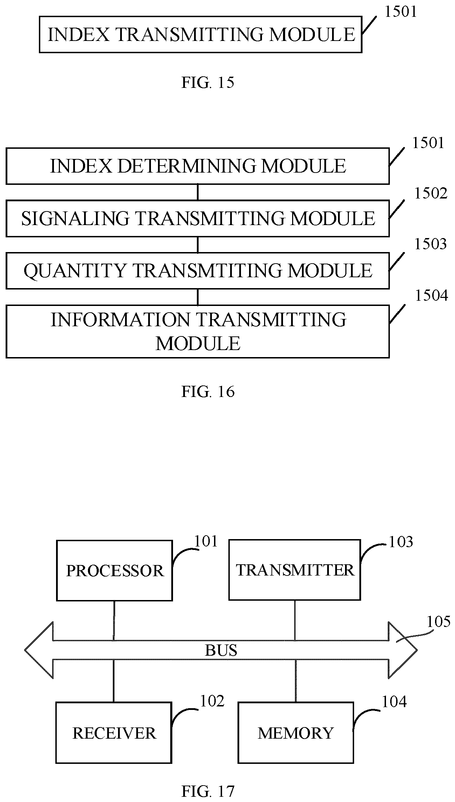

FIG. 15 is a block diagram illustrating a communication apparatus provided in an exemplary implementation of the present disclosure. The apparatus is applied to a network device illustrated in FIG. 5. The apparatus includes an index transmitting module 1501.

The index transmitting module 1501 is configured to transmit a first closed-loop power control adjustment state index corresponding to an SRS resource set, where the first closed-loop power control adjustment state index is used to indicate a closed-loop power control adjustment state for the SRS resource set, the closed-loop power control adjustment state is one of multiple closed-loop power control adjustment states independent of a PUSCH, and the SRS resource set includes at least one SRS resource.

In an implementation, the index transmitting module 1501 is configured to transmit configuration parameters of the SRS resource set to the terminal device, where the configuration parameters of the SRS resource set includes the first closed-loop power control adjustment state index; or transmit, on condition that SRSs transmitted on the SRS resource set are semi-persistent SRSs, an MAC CE to the terminal device, where the MAC CE is used to indicate the first closed-loop power control adjustment state index and used to activate the SRS resource set; or transmit, on condition that the SRSs transmitted on the SRS resource set are aperiodic SRSs, first DCI to the terminal device, where the DCI contains the first closed-loop power control adjustment state index and used to trigger the aperiodic SRSs; or indicate to the terminal device a TCI state adopted by a first SRS resource in the SRS resource set, to cause the terminal device to determine the first closed-loop power control adjustment state index according to the TCI state.

In an implementation, referring to FIG. 16, the apparatus further includes a signaling transmitting module 1502.

The signaling transmitting module 1502 is configured to transmit first higher-layer signaling for TCI state configuring to the terminal device, where the first higher-layer signaling contains the closed-loop power control adjustment state index corresponding to the TCI state. Alternatively, the signaling transmitting module 1502 is configured to transmit second higher-layer signaling to the terminal device, where the second higher-layer signaling is used to indicate a correspondence between TCI state IDs of TCI states and closed-loop power control adjustment state indices.

In an implementation, referring to FIG. 16, the apparatus further includes a quantity transmitting module 1503 configured to transmit the quantity of closed-loop power control adjustment states independent of the PUSCH to the terminal device, where the quantity of the closed-loop power control adjustment states is larger than 1.

In an implementation, the apparatus further includes an information transmitting module 1504 configured to transmit second configuration information to the terminal device. The second configuration information is used to configure a second closed-loop power control adjustment state index for at least one TPC command block in second DCI, or configure a second closed-loop power control adjustment state index for at least one TPC command in the at least one TPC command block in the second DCI. The second DCI includes the at least one TPC command block for SRSs. The second closed-loop power control adjustment state index is used to determine a closed-loop power control adjustment state corresponding to a TPC command in the TPC command block from the multiple closed-loop power control adjustment states, and the multiple closed-loop power control adjustment states are independent of the PUSCH.

FIG. 17 is a schematic structural diagram illustrating a communication device provided in an exemplary implementation of the present disclosure. The communication device includes a processor 101, a receiver 102, a transmitter 103, a memory 104, and a bus 105.

The processor 101 includes one or more processing cores, and the processor 101 executes various functional applications and information processing by running software programs and modules.

The receiver 102 and the transmitter 103 may be implemented as a communication component, which may be a communication chip.

The memory 104 is coupled to the processor 101 through the bus 105.

The memory 104 may be configured to store at least one instruction, and the processor 101 may be configured to execute the at least one instruction, so as to implement various steps in the foregoing method implementations.

Additionally, the memory 104 may be implemented by any type or combination of volatile or non-volatile storage devices including, but not limited to, a magnetic or optical disk, an electrically erasable programmable read only memory (EEPROM), an erasable programmable read only memory (EPROM), a static random access memory (SRAM), a read only memory (ROM), a magnetic memory, a flash memory, and a programmable read only memory (PROM).

In an exemplary implementation, a computer-readable storage medium is also provided. The computer-readable storage medium stores at least one piece of instructions, at least one program, a code set, or an instruction set. The at least one piece of instructions, the at least one program, the code set, or the instruction set is loaded and executed by the processor to implement the method for determining transmit power executed by the communication device provided in each of the above method implementations.

Those of ordinary skill in the art can understand that all or part of the steps of implementing the above implementations can be completed by hardware, or can be completed by instructing relevant hardware through a program. The program can be stored in a computer-readable storage medium. The storage medium mentioned may be a RAM, a magnetic disk, an optical disk, or the like.

The above illustrations are only optional implementations of the present disclosure, and are not intended to limit the present disclosure. Any modifications, equivalent replacements, improvements, etc. made within the spirit and principles of the present disclosure shall be included in the scope of protection of the present disclosure.

### Claims

1. A method for determining transmit power, the method being applied to a terminal device and comprising:

   determining a first closed-loop power control adjustment state index corresponding to a sounding reference signal (SRS) resource set, the first closed-loop power control adjustment state index being used to indicate a closed-loop power control adjustment state for the SRS resource set, and the SRS resource set comprising at least one SRS resource;

   determining the closed-loop power control adjustment state for the SRS resource set from a plurality of closed-loop power control adjustment states, according to the first closed-loop power control adjustment state index, the plurality of closed-loop power control adjustment states being independent of a physical uplink shared channel (PUSCH); and

   determining transmit power for the at least one SRS resource according to a value of the closed-loop power control adjustment state.

2. The method of claim 1, wherein determining the first closed-loop power control adjustment state index corresponding to the SRS resource set comprises:

   determining the first closed-loop power control adjustment index from configuration parameters of the SRS resource set;

   on condition that SRSs transmitted on the SRS resource set are semi-persistent SRSs, determining, from a medium access control control element (MAC CE) for activating the SRS resource set, the first closed-loop power control adjustment state index indicated by the MAC CE;

   on condition that the SRSs transmitted on the SRS resource set are aperiodic SRSs, determining, from first downlink control information (DCI) for triggering the aperiodic SRSs, the first closed-loop power control adjustment state index indicated by the first DCI; or

   determining the first closed-loop power control adjustment state index according to a transmission configuration indication (TCI) state adopted by a first SRS resource in the SRS resource set.

3. The method of claim 2, wherein determining the first closed-loop power control adjustment state index according to the TCI state adopted by the first SRS resource in the SRS resource set comprises:

determining the TCI state adopted by the first SRS resource in the SRS resource set; and
determining a closed-loop power control adjustment state index corresponding to the TCI state as the first closed-loop power control adjustment state index.

4. The method of claim 3, further comprising:

receiving first higher-layer signaling for TCI state configuring, wherein the first higher-layer signaling contains the closed-loop power control adjustment state index corresponding to the TCI state; or
receiving second higher-layer signaling, wherein the second higher-layer signaling is used to indicate a correspondence between TCI state identifiers (IDs) of TCI states and closed-loop power control adjustment state indices;
determining the closed-loop power control adjustment state index corresponding to the TCI state as the first closed-loop power control adjustment state index comprises:

determining the closed-loop power control adjustment state index corresponding to the TCI state according to a TCI state ID of the TCI state and the correspondence; and
determining the closed-loop power control adjustment state index as the first closed-loop power control adjustment state index.

5. The method of claim 2, wherein

the first SRS resource is an earliest transmitted SRS resource in the SRS resource set; or
the first SRS resource is an SRS resource with a lowest SRS resource ID in the SRS resource set.

6. The method of claim 2, wherein TCI states adopted by different SRS resources in the SRS resource set correspond to a same closed-loop power control adjustment state index.

7. The method of any of claims 1 to 6, wherein determining the first closed-loop power control adjustment state index corresponding to the SRS resource set comprises:
determining a lowest closed-loop power control adjustment state index as the first closed-loop power control adjustment state index on condition that a first configuration information for configuring the first closed-loop power control adjustment state index is not received.

8. The method of any of claims 1 to 7, wherein prior to determining, according to the first closed-loop power control adjustment state index, the closed-loop power control adjustment state for the SRS resource set from the plurality of closed-loop power control adjustment states, the method further comprises:
receiving quantity of the closed-loop power control adjustment states independent of the PUSCH configured by a network device, wherein the quantity of the closed-loop power control adjustment states is larger than 1.

9. The method of claim 1, wherein determining the transmit power for the at least one SRS resource according to the value of the closed-loop power control adjustment state comprises:

determining a second closed-loop power control adjustment state index, wherein the second closed-loop power control adjustment state index is used to determine a closed-loop power control adjustment state corresponding to a transmit power control (TPC) command from the plurality of closed-loop power control adjustment states, and the plurality of closed-loop power control adjustment states are independent of the PUSCH;
determining the closed-loop power control adjustment state corresponding to the TPC command for SRSs according to the second closed-loop power control adjustment state index;
determining a value of the closed-loop power control adjustment state corresponding to the TPC command according to an adjustment value indicated by the TPC command; and
determining the transmit power for the at least one SRS resource according to the value of the closed-loop power control adjustment state.

10. The method of claim 9, further comprising:
receiving second configuration information from the network device, wherein the second configuration information is used to configure a second closed-loop power control adjustment state index for at least one TPC command block in second DCI, or the second configuration information is used to configure a second closed-loop power control adjustment state index for at least one TPC command in the at least one TPC command block in the second DCI, wherein the second DCI comprises the at least one TPC command block for SRSs.

11. The method of claim 9, wherein determining the value of the closed-loop power control adjustment state corresponding to the TPC command according to the adjustment value indicated by the TPC command comprises:
determining that the value of the closed-loop power control adjustment state remains unchanged on condition that transmit power corresponding to the closed-loop power control adjustment state corresponding to the TPC command is maximum transmit power and the adjustment value is positive.

12. The method of claim 9, wherein determining the value of the closed-loop power control adjustment state corresponding to the TPC command according to the adjustment value indicated by the TPC command comprises:
determining that the value of the closed-loop power control adjustment state remains unchanged on condition that transmit power corresponding to the closed-loop power control adjustment state corresponding to the TPC command is minimum transmit power and the adjustment value is negative.

13. The method of any of claims 1 to 12, further comprising:
resetting the closed-loop power control adjustment state for the SRS resource set in response to reception of third higher-layer signaling for configuring target power or a path loss factor for the SRS resource set.

14. The method of claim 1, wherein determining the first closed-loop power control adjustment state index corresponding to the SRS resource set comprises:
determining a same first closed-loop power control adjustment state index for a plurality of SRS resource sets used for obtaining downlink channel state information (CSI) or used for antenna switching.

15. A method for determining transmit power, the method being applied to a network device and comprising:
transmitting a first closed-loop power control adjustment state index corresponding to a sounding reference signal (SRS) resource set, the first closed-loop power control adjustment state index being used to indicate a closed-loop power control adjustment state for the SRS resource set, the closed-loop power control adjustment state being one of a plurality of closed-loop power control adjustment states independent of a physical uplink shared channel (PUSCH), and the SRS resource set comprising at least one SRS resource.

16. The method of claim 15, wherein transmitting the first closed-loop power control adjustment state index to the terminal device comprises:

transmitting configuration parameters of the SRS resource set to the terminal device, wherein the configuration parameters of the SRS resource set comprises the first closed-loop power control adjustment state index;
on condition that SRSs transmitted on the SRS resource set are semi-persistent SRSs, transmitting a medium access control control element (MAC CE) to the terminal device, wherein the MAC CE is used to indicate the first closed-loop power control adjustment state index and used to activate the SRS resource set;
on condition that the SRSs transmitted on the SRS resource set are aperiodic SRSs, transmitting first downlink control information (DCI) to the terminal device, wherein the first DCI comprises the first closed-loop power control adjustment state index and used to trigger the aperiodic SRSs; or
indicating to the terminal device a transmission configuration indication (TCI) state adopted by a first SRS resource in the SRS resource set, to cause the terminal device to determine the first closed-loop power control adjustment state index according to the TCI state.

17. The method of claim 16, further comprising:

transmitting first higher-layer signaling for TCI state configuring to the terminal device, wherein the first higher-layer signaling contains a closed-loop power control adjustment state index corresponding to the TCI state; or
transmitting second higher-layer signaling to the terminal device, wherein the second higher-layer signaling is used to indicate a correspondence between TCI state identifiers (IDs) of TCI states and closed-loop power control adjustment state indices.

18. The method of claim 15, further comprising:
transmitting quantity of the closed-loop power control adjustment states independent of the PUSCH to the terminal device, wherein the quantity of the closed-loop power control adjustment states is larger than 1.

19. The method of claim 15, further comprising:

transmitting second configuration information to the terminal device, wherein the second configuration information is used to configure a second closed-loop power control adjustment state index for a TPC command block in second DCI or configure a second closed-loop power control adjustment index for at least one TPC command in the at least one TPC command block in the second DCI, wherein the second DCI comprises at least one TPC command block for SRSs, the second closed-loop power control adjustment state index is used to determine a closed-loop power control adjustment state corresponding to a TPC command in the TPC command block from the plurality of closed-loop power control adjustment states, and the plurality of closed-loop power control adjustment states are independent of the PUSCH.

20. An apparatus for determining transmit power, the apparatus being applied to a terminal device and comprising:

an index determining module configured to determine a first closed-loop power control adjustment state index corresponding to a sounding reference signal (SRS) resource set, the first closed-loop power control adjustment state index being used to indicate a closed-loop power control adjustment state for the SRS resource set, and the SRS resource set comprising at least one SRS resource;
a state determining module configured to determine the closed-loop power control adjustment state for the SRS resource set from a plurality of closed-loop power control adjustment states, according to the first closed-loop power control adjustment state index, the plurality of closed-loop power control adjustment states being independent of a physical uplink shared channel (PUSCH); and
a power determining module configured to determine transmit power for the at least one SRS resource according to a value of the closed-loop power control adjustment state.

21. The apparatus of claim 20, wherein the index determining module is further configured to:

determine the first closed-loop power control adjustment index from configuration parameters of the SRS resource set;
determine, on condition that SRSs transmitted on the SRS resource set are semi-persistent SRSs, the first closed-loop power control adjustment state index indicated by a medium access control control element (MAC CE) from the MAC CE for activating the SRS resource set;
determine, on condition that the SRSs transmitted on the SRS resource set are aperiodic SRSs, the first closed-loop power control adjustment state index indicated by first downlink control information (DCI) from the first DCI for triggering the aperiodic SRSs; or
determine the first closed-loop power control adjustment state index according to a transmission configuration indication (TCI) state adopted by a first SRS resource in the SRS resource set.

22. The apparatus of claim 21, wherein the index determining module is further configured to:

determine the TCI state adopted by the first SRS resource in the SRS resource set; and
determine a closed-loop power control adjustment state index corresponding to the TCI state as the first closed-loop power control adjustment state index.

23. The apparatus of claim 22, further comprising a signaling receiving module, wherein

the signaling receiving module is configured to receive first higher-layer signaling for TCI state configuring, wherein the first higher-layer signaling contains the closed-loop power control adjustment state index corresponding to the TCI state; or
the signaling receiving module is configured to receive second higher-layer signaling, wherein the second higher-layer signaling is used to indicate a correspondence between TCI state identifiers (IDs) of TCI states and closed-loop power control adjustment state indices;
wherein the closed-loop power control adjustment state index corresponding to the TCI state is determined according to a TCI state ID of the TCI state and the correspondence; and
the closed-loop power control adjustment state index is determined as the first closed-loop power control adjustment state index.

24. The apparatus of claim 21, wherein

the first SRS resource is an earliest transmitted SRS resource in the SRS resource set; or
the first SRS resource is an SRS resource with a lowest SRS resource ID in the SRS resource set.

**25.** The apparatus of claim 21, wherein TCI states adopted by different SRS resources in the SRS resource set correspond to a same closed-loop power control adjustment state index.

**26.** The apparatus of any of claims 20 to 25, wherein the index determining module is further configured to determine a lowest closed-loop power control adjustment state index as the first closed-loop power control adjustment state index on condition that a first configuration information for configuring the first closed-loop power control adjustment state index is not received.

**27.** The apparatus of any of claims 20 to 26, further comprising a quantity receiving module configured to receive quantity of closed-loop power control adjustment states independent of the PUSCH configured by a network device, wherein the quantity of the closed-loop power control adjustment states is larger than 1.

**28.** The apparatus of claim 20, wherein the power determining module comprises:

an index determining unit configured to determine a second closed-loop power control adjustment state index, wherein the second closed-loop power control adjustment state index is used to determine a closed-loop power control adjustment state corresponding to a transmit power control (TPC) command from the plurality of closed-loop power control adjustment states, and the plurality of closed-loop power control adjustment states are independent of the PUSCH;
a state determining unit configured to determine the closed-loop power control adjustment state corresponding to the TPC command for SRSs according to the second closed-loop power control adjustment state index;
an adjusting unit configured to determine a value of the closed-loop power control adjustment state corresponding to the TPC command according to an adjustment value indicated by the TPC command; and
a power determining unit configured to determine the transmit power for the at least one SRS resource according to the value of the closed-loop power control adjustment state.

**29.** The apparatus of claim 28, further comprising:
an information receiving module configured to receive second configuration information transmitted by the network device, wherein the second configuration information is used to configure a second closed-loop power control adjustment state index for at least one TPC command block in second DCI, or configure a second closed-loop power control adjustment state index for at least one TPC command in the at least one TPC command block in the second DCI, wherein the second DCI comprises the at least one TPC command block for SRSs.

**30.** The apparatus of claim 28, wherein the adjusting unit is configured to determine that the value of the closed-loop power control adjustment state remains unchanged on condition that transmit power corresponding to the closed-loop power control adjustment state corresponding to the TPC command is maximum transmit power and the adjustment value is positive.

**31.** The apparatus of claim 28, wherein the adjusting unit is configured to determine that the value of the closed-loop power control adjustment state remains unchanged on condition that transmit power corresponding to the closed-loop power control adjustment state corresponding to the TPC command is minimum transmit power and the adjustment value is negative.

**32.** The apparatus of any of claims 20 to 31, further comprising:
a resetting module configured to reset the closed-loop power control adjustment state corresponding to the SRS resource set in response to reception of third higher-layer signaling for configuring target power or a path loss factor for the SRS resource set.

**33.** The apparatus of claim 20, wherein the index determining module is further configured to determine a same first closed-loop power control adjustment state index for a plurality of SRS resource sets used for obtaining downlink channel state information (CSI) or used for antenna switching.

**34.** An apparatus for determining transmit power, the apparatus being applied to a network device and comprising:
an index transmitting module configured to transmit a first closed-loop power control adjustment state index corresponding to a sounding reference signal (SRS) resource set to a terminal device, the first closed-loop power control adjustment state index being used to indicate a closed-loop power control adjustment state for the SRS resource set, the closed-loop power control adjustment state being one of a plurality of closed-loop power control adjustment states independent of a physical uplink shared channel (PUSCH), and the SRS resource set comprising at least one SRS resource.

35. The apparatus of claim 34, wherein the index transmitting module is configured to:

transmit configuration parameters of the SRS resource set to the terminal device, wherein the configuration parameters of the SRS resource set comprises the first closed-loop power control adjustment state index;
transmit, on condition that SRSs transmitted on the SRS resource set are semi-persistent SRSs, a medium access control control element (MAC CE) to the terminal device, wherein the MAC CE is used to indicate the first closed-loop power control adjustment state index and used to activate the SRS resource set;
transmit, on condition that the SRSs transmitted on the SRS resource set are aperiodic SRSs, first downlink control information (DCI) to the terminal device, wherein the first DCI comprises the first closed-loop power control adjustment state index and used to trigger the aperiodic SRSs; or
indicate to the terminal device a transmission configuration indication (TCI) state adopted by a first SRS resource in the SRS resource set, to cause the terminal device to determine the first closed-loop power control adjustment state index according to the TCI state.

36. The apparatus of claim 34, further comprising a signaling transmitting module configured to:

transmit first higher-layer signaling for TCI state configuring to the terminal device, wherein the first higher-layer signaling contains a closed-loop power control adjustment state index corresponding to a TCI state; or
transmit second higher-layer signaling to the terminal device, wherein the second higher-layer signaling is used to indicate a closed-loop power control adjustment state index corresponding to a TCI state ID of the TCI state.

37. The apparatus of claim 34, further comprising a quantity transmitting module configured to transmit quantity of closed-loop power control adjustment states independent of the PUSCH to the terminal device, wherein the quantity of the closed-loop power control adjustment states is larger than 1.

38. The apparatus of claim 34, further comprising:
an information transmitting module configured to transmit second configuration information to the terminal device, wherein the second configuration information is used to configure a second closed-loop power control adjustment state index for at least one TPC command block in second DCI or configure a second closed-loop power control adjustment index for at least one TPC command in the at least one TPC command block in the second DCI, the second DCI comprises the at least one TPC command block for SRSs, the second closed-loop power control adjustment state index is used to determine a closed-loop power control adjustment state corresponding to a TPC command in the TPC command block from the plurality of closed-loop power control adjustment states, and the plurality of closed-loop power control adjustment states are independent of the PUSCH.

39. A terminal device comprising:

a processor;
a transceiver coupled with the processor;
a memory configured to store executable instructions of the processor;
the processor being configured to load and execute the executable instructions to implement the method for determining transmit power of any of claims 1 to 14.

40. A network device comprising:

a processor;
a transceiver coupled with the processor;
a memory configured to store executable instructions of the processor;
the processor being configured to load and execute the executable instructions to implement the method for determining transmit power of any of claims 15 to 19.

41. A computer-readable storage medium storing executable instructions, the executable instructions being loaded and executed by a processor to implement the method for determining transmit power of any of claims 1 to 19.

FIG. 1

FIG. 2

FIG. 3

FIG. 4

FIG. 5

Terminal device

Network device

601, transmit, by the network device, a first closed-loop power control adjustment state index corresponding to an SRS resource set to the terminal device

602, receive, by the terminal device, the first closed-loop power control adjustment state index transmitted by the network device

603, determine, by the terminal device, the first closed-loop power control adjustment state index corresponding to the SRS resource set

604, determine, by the terminal device, a closed-loop power control adjustment state for the SRS resource set from multiple closed-loop power control adjustment states according to the first closed-loop power control adjustment state index

605, determine, by the terminal device, transmit power for at least one SRS resource according to a value of the closed-loop power control adjustment state

FIG. 6

| Terminal device | | Network device |
|---|---|---|

6011, transmit, by the network device, configuration parameters of an SRS resource set to the terminal device, where the configuration parameters of the SRS resource set include a first closed-loop power control adjustment state index

6021, receive, by the terminal device, the configuration parameters of the SRS resource set

6031, determine, by the terminal device, the first closed-loop power control adjustment state index from the configuration parameters of the SRS resource set

604, determine, by the terminal device, a closed-loop power control adjustment state for the SRS resource set from multiple closed-loop power control adjustment states according to the first closed-loop power control adjustment state index

605, determine, by the terminal device, transmit power for at least one SRS resource according to a value of the closed-loop power control adjustment state

FIG. 7

```
┌─────────────────────┐                              ┌─────────────────────┐
│   Terminal device   │                              │   Network device    │
└─────────────────────┘                              └─────────────────────┘
          │                                                     │
          │         6012, transmit, by the network device, an MAC CE
          │         to the terminal device, if SRSs transmitted on an SRS
          │                resource set are quasi-persistent SRSs
          │◄────────────────────────────────────────────────────┤
┌─────────────────────────────────┐                            │
│  6022, receive, by the terminal device, the                  │
│  MAC CE, if the SRSs transmitted on the SRS                  │
│  resource set are quasi-persistent SRSs                      │
└─────────────────────────────────┘                            │
          │                                                     │
┌─────────────────────────────────┐                            │
│  6032, determine, by the terminal device, the                │
│  first closed-loop power control adjustment state            │
│  index indicated by the MAC CE                               │
└─────────────────────────────────┘                            │
          │                                                     │
┌─────────────────────────────────┐                            │
│  604, determine, by the terminal device, a                   │
│  closed-loop power control adjustment state for              │
│  the SRS resource set from multiple closed-loop             │
│  power control adjustment states according to the           │
│  first closed-loop power control adjustment state           │
│  index                                                       │
└─────────────────────────────────┘                            │
          │                                                     │
┌─────────────────────────────────┐                            │
│  605, determine, by the terminal device,                     │
│  transmit power for at least one SRS resource               │
│  according to a value of the closed-loop power              │
│  control adjustment state                                    │
└─────────────────────────────────┘                            │
          │                                                     │
```

FIG. 8

| Terminal device | | Network device |
|---|---|---|

6013, transmit, by the network device, first DCI to the terminal device, if SRSs transmitted on the SRS resource set are aperiodic SRSs

6023, receive, by the terminal device, the first DCI if the SRSs transmitted on the SRS resource set are all aperiodic SRSs

6033, determine, by the terminal device, a first closed-loop power control adjustment state index indicated by the first DCI

604, determine, by the terminal device, a closed-loop power control adjustment state for the SRS resource set from multiple closed-loop power control adjustment states according to the first closed-loop power control adjustment state index

605, determine, by the terminal device, transmit power for at least one SRS resource according to a value of the closed-loop power control adjustment state

FIG. 9

Terminal device

Network device

601, transmit, by the network device, a first closed-loop power control adjustment state index corresponding to an SRS resource set to the terminal device

602, receive, by the terminal device, the first closed-loop power control adjustment state index transmitted by the network device

6034, determine, by the terminal device, the first closed-loop power control adjustment state index according to a TCI state adopted by a first SRS resource in the SRS resource set

604, determine, by the terminal device, a closed-loop power control adjustment state for the SRS resource set from multiple closed-loop power control adjustment states according to the first closed-loop power control adjustment state index

605, determine, by the terminal device, transmit power for at least one SRS resource according to a value of the closed-loop power control adjustment state

FIG. 10

```
┌─────────────────────────────┐
│       Terminal device       │
└─────────────────────────────┘
              │
┌─────────────────────────────────────────────┐
│    6035，  determine, by the terminal device, a closed-loop
│ power control adjustment state index corresponding to a TCI
│ state adopted by a lowest SRS resource as a first closed-loop
│ power control adjustment state index, if no first closed-loop
│     power control adjustment state index is received
└─────────────────────────────────────────────┘
              │
┌─────────────────────────────────────────────┐
│    604,  determine, by the terminal device, a closed-loop
│ power control adjustment state for an SRS resource set from
│    multiple closed-loop power control adjustment states
│ according to the first closed-loop power control adjustment
│                    state index
└─────────────────────────────────────────────┘
              │
┌─────────────────────────────────────────────┐
│ 605, determine, by the terminal device, transmit power
│ for at least one SRS resource according to a value of the
│        closed-loop power control adjustment state
└─────────────────────────────────────────────┘
              │
```

FIG. 11

| Terminal device | | Network device |
|---|---|---|

601, transmit, by the network device, a first closed-loop power control adjustment state index corresponding to an SRS resource set to the terminal device

602, receive, by the terminal device, the first closed-loop power control adjustment state index transmitted by the network device

603, determine, by the terminal device, the first closed-loop power control adjustment state index corresponding to the SRS resource set

604, determine, by the terminal device, a closed-loop power control adjustment state for the SRS resource set from multiple closed-loop power control adjustment states according to the first closed-loop power control adjustment state index

1201, transmit, by the network deivce, a second closed-loop power control adjustment state index to the terminal device

1202, receive, by the terminal device, the second closed-loop power control adjustment state index transmitted by the network device

1203, determine, by the terminal device, a closed-loop power control adjustment state corresponding to a TPC command according to the second closed-loop power control adjustment state index

1204, adjust, by the terminal device, a value of the closed-loop power control adjustment state according to an adjustment value indicated by the TPC command, and determine an adjusted value of the closed-loop power control adjustment state

605, determine, by the terminal device, transmit power for at least one SRS resource according to the value of the closed-loop power control adjustment state

FIG. 12

INDEX DETERMINING MODULE    1301

STATE DETERMINING MODULE    1302

POWER DETERMINING MDOULE    1303

FIG. 13

INDEX DETERMING MODULE    1301

STATE DETERMINING MODULE    1302

INDEX DETERMINING UNIT    13031

STATE DETERMINING UNIT    13032

POWER DETERMINING UNIT    13034

ADJUSTING UNIT    13033

1303

POWER DETERMINING MODULE

SIGNALING RECEIVING MODULE    1304

QUANTITY RECEIVING MODULE    1305

INFORMATION RECEIVING MODULE    1306

RESETTING MODULE    1307

FIG. 14

INDEX TRANSMITTING MODULE — 1501

FIG. 15

INDEX DETERMINING MODULE — 1501

SIGNALING TRANSMITTING MODULE — 1502

QUANTITY TRANSMTITING MODULE — 1503

INFORMATION TRANSMITTING MODULE — 1504

FIG. 16

PROCESSOR 101        TRANSMITTER 103

BUS 105

RECEIVER 102        MEMORY 104

FIG. 17

## INTERNATIONAL SEARCH REPORT

| International application No. |
| --- |
| **PCT/CN2020/074440** |

**A. CLASSIFICATION OF SUBJECT MATTER**

H04W 52/08(2009.01)i; H04W 52/14(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 上行物理控制信道, 探测参考信号, 功率, 功控, 闭环, 索引, 半持续, 半静态, 周期, 独立, PUCCH, PUSCH, PDCCH, SRS, power, loop, index, static, interval, TPC, TCI, DCI

**C. DOCUMENTS CONSIDERED TO BE RELEVANT**

| Category* | Citation of document, with indication, where appropriate, of the relevant passages | Relevant to claim No. |
| --- | --- | --- |
| X | CN 109803363 A (HUAWEI TECHNOLOGIES CO., LTD.) 24 May 2019 (2019-05-24) description, paragraphs [0106]-[0225] | 1-41 |
| X | CN 109302273 A (HUAWEI TECHNOLOGIES CO., LTD.) 01 February 2019 (2019-02-01) description, paragraphs [0254]-[0280], [0407]-[0486], [0567]-[0583], [0602] | 1-41 |
| X | CN 110049539 A (VIVO COMMUNICATION TECHNOLOGY CO., LTD.) 23 July 2019 (2019-07-23) descriptions [0002]-[0016], [0045]-[0205] | 1-41 |
| X | SAMSUNG. "Introduction of MIMO enhancements in NR" *3GPP TSG-RAN WG1 Meeting #99 R1-1913654*, 29 November 2019 (2019-11-29), pp. 14-15 | 1-41 |
| A | WO 2019074289 A1 (LG ELECTRONICS INC.) 18 April 2019 (2019-04-18) entire document | 1-41 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 September 2020** | **10 October 2020** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/074440**

| Patent document cited in search report | | | Publication date (day/month/year) | Patent family member(s) | | | Publication date (day/month/year) |
|---|---|---|---|---|---|---|---|
| CN | 109803363 | A | 24 May 2019 | CN | 111386734 | A | 07 July 2020 |
| | | | | WO | 2019096316 | A1 | 23 May 2019 |
| CN | 109302273 | A | 01 February 2019 | WO | 2019192591 | A1 | 10 October 2019 |
| CN | 110049539 | A | 23 July 2019 | WO | 2019141057 | A1 | 25 July 2019 |
| WO | 2019074289 | A1 | 18 April 2019 | None | | | |

Form PCT/ISA/210 (patent family annex) (January 2015)